Europäisches Patentamt

**European Patent Office**

Office européen des brevets

(11) Veröffentlichungsnummer: **0 144 403**
**B1**

(12) EUROPÄISCHE PATENTSCHRIFT

(45) Veröffentlichungstag der Patentschrift:
**11.05.88**

(21) Anmeldenummer: **84902324.7**

(22) Anmeldetag: **29.05.84**

(86) Internationale Anmeldenummer:
**PCT/AT 84/00021**

(87) Internationale Veröffentlichungsnummer:
**WO 84/04861 (06.12.84 Gazette 84/28)**

(51) Int. Cl.⁴: **H 04 L 11/16**

(54) VERFAHREN UND ANORDNUNG ZUM ÜBERTRAGEN VON INFORMATIONEN IN EINEM DATENRING.

(30) Priorität: **31.05.83 AT 1991/83**

(43) Veröffentlichungstag der Anmeldung:
**19.06.85 Patentblatt 85/25**

(45) Bekanntmachung des Hinweises auf die Patenterteilung:
**11.05.88 Patentblatt 88/19**

(84) Benannte Vertragsstaaten:
**AT BE CH DE FR GB LI NL**

(56) Entgegenhaltungen:
**EP - A - 0 035 789**
**EP - A - 0 065 377**
**GB - A - 2 094 110**
**US - A - 3 919 484**

**Telecommunications and Radio Engineering, Band 36/37, Heft 2, Februar 1982, Silver Spring (US), V.V. Abramov u.a.: "Optical Fibers Ring System of Digital Channels", Seiten 110-112**
**Proceedings of the National Electronics Conference, Band 36, 1982, Oak Brook (US), J.A. Davis u.a.: "A local network for experimental support", S. 356-362**

(73) Patentinhaber: **Österreichisches Forschungszentrum Seibersdorf Ges.m.b.H., Kramergasse 1, A-1010 Wien (AT)**

(72) Erfinder: **PREINEDER, Hans, Kleinwolkersdorf 4, A-2821 Lanzenkirchen (AT)**
Erfinder: **QUERASSER, Edwin, Mexikoplatz 23/III/14, A-1200 Wien (AT)**
Erfinder: **BUSCHBECK, Frank, Krobothgasse 13, A-1232 Wien (AT)**

**Beschreibung**

Die Erfindung betrifft ein Verfahren zur Übertragung von Daten in einem zumindest zwei Stationen aufweisenden Datenring, von welchen, gegebenenfalls Peripheriegeräte besitzenden Stationen zumindest eine eine übergeordnete Master-Station ist, in der für die zu übertragenden Daten ein Übertragungsrahmen generiert wird, der in den Datenring eingespeist und durch alle aufeinanderfolgenden Stationen weitergeleitet wird, wobei jeder Übertragungsrahmen mit konstanter vorgegebener Taktanzahl generiert wird und übertragungsprotokollfrei, insbesondere adressfrei, ausschliesslich die für die Übertragung von einer Station zu einer oder mehreren anderen bestimmten Daten enthält, dass jedem Übertragungsrahmen unmittelbar folgend ein weiterer, identer, gegebenenfalls die nächsten zu übertragenden Daten enthaltender Übertragungsrahmen generiert und eingespeist wird, so dass am Ende eines Übertragungsrahmens unmittelbar der Anfang des weiteren Übertragungsrahmens folgt, und dass die einzelnen, insbesondere untereinander gleich grossen Slots im Übertragungsrahmen vor der Einspeisung des jeweiligen Übertragungsrahmens den einzelnen Stationen zum Informationsaustausch fix oder temporär veränderbar zugeordnet worden sind. Die Erfindung betrifft ferner eine Anordnung zur Übertragung von Informationen in einem Datenring, welcher Datenring zumindest zwei über ein Datenübertragungsmedium, z.B. Kabel, Sendeeinrichtungen, Lichtleiter, Elektrolyte oder dgl., verbundene Stationen aufweist, wobei zumindest eine Station eine übergeordnete Master-Station ist, die einen Generator für einen Übertragungsrahmen aufweist, welcher in unmittelbarer Aufeinanderfolge übertragungsprotokollfreie Übertragungsrahmen mit konstanter Taktanzahl erstellt, die von ihrer Mediumschnittstelle unmittelbar aneinander anschliessend in das Übertragungsmedium eingespeist werden, den Stationen weitergegeben und von den Mediumschnittstellen der Stationen in das die Stationen verbindende Übertragungsmedium eingespeist und über das Übertragungsmedium durch alle Stationen zurück an die Master-Station geleitet werden, wobei in den Stationen und der Master-Station jeweils eine Empfangseinrichtung für den Übertragungsrahmen, eine Synchronisationseinrichtung und der Mediumschnittstelle vorgeordnete Ein-Ausgabe-Einrichtungen, mit denen an entsprechender Stelle im Übertragungsrahmen enthaltene Daten an Peripheriegeräte weiterleitbar bzw. durch die von den Peripheriegeräten stammende Daten in den Übertragungsrahmen eingebbar sind, vorgesehen sind.

Aus der EP-A-0 035 789 ist ein Datenring mit gleichberechtigten Stationen ohne Master-Stationen bekannt, wobei in jeder Station bei jedem Eintreffen eines Übertragungsrahmens eine Neusynchronisation erfolgt. Es werden Übertragungsrahmen mit Protokoll bzw. Adressen eingesetzt und der Synchronisation folgt eine Adressüberprüfung.

Die Telecommunications and Radio Engineering, Vol 36/37, issue 2, Febr. 82, S. 110-112, zeigen eine Anordnung, bei der bei jedem Eintreffen eines bytes eine Synchronisation erfolgt. Jeder Übertragungsrahmen enthält 8 Datenworte und damit 8 Synchronisationsimpulse. Überdies werden die Übertragungsrahmen in Zeitabständen von 100 us übertragen. Bei der in den «Proceedings of the National Electronics Conference», Vol 36, 1982, S. 356 bis 362, beschriebenen Anordnung, die der eingangs beschriebenen Anordnung nahekommt, erfolgt ebenfalls bei jedem Eintreffen eines Übertragungsrahmens durch eine im Übertragungsrahmen enthaltene Synchronisationskennung eine Neusynchronisation.

Datennetze werden üblicherweise als «Punkt zu Punkt» Verbindungen zwischen Knotenpunkten ausgeführt oder an einem gemeinsamen Übertragungsmedium (Kabel, Funk) hängen gleichzeitig mehrere Stationen, von denen jedoch gleichzeitig nur eine senden darf. Die Nachrichten werden üblicherweise serialisiert und in Blöcken übertragen. Der Verkehr zwischen den Stationen wird jeweils durch ein netzwerkspezifisches Protokoll geregelt. Solche Protokolle sind z.B. X25 der CCITT, Ethernet, ISO-P 802 usw.

Ausser bei zeitsegmentierten Verbindungen ist für eine Datenübergabe die Regelung der Zugriffsberechtigung (Arbitration) erforderlich, welche einen gewissen Zeitaufwand benötigt und mit in den Übertragungsrahmen enthaltenen Adressen und Zugriffsberechtigungen erfolgt. Dies ist z.B. auch bei der DE-A-2 612 311 der Fall, welche eine vergleichbare Anordnung beschreibt.

Für jede Übertragungseinheit, bzw. jeden Übertragungsrahmen (Informationsblock) ist ein Synchronisationsvorgang erforderlich, dessen Zeitoverhead in die Übertragungszeit voll eingeht.

Alle übertragenen Protokolle enthalten Prüfmechanismen (z.B. CRC oder LRC, VCR Prüfung), die Übertragungsfehler erkennen sollen. Bei erkannten Übertragungsfehlern werden Nachrichtenblöcke wiederholt.

Aufgrund der durch eine schwankende Netzwerkbelastung verschieden schnellen Arbitration sowie durch allfällige Übertragungsfehler bedingten Wiederholungen entstehen in allen bekannten Local Area Networks nicht vorhersagbare Übertragungsverzögerungen und diese sind daher in zeitkritischen Real Time Anwendungen und Regelkreisen nicht anwendbar.

Gerade die Entwicklung der Prozessdatenverarbeitungsanlagen zu lokal verteilten Systemen mit zentralen Datenbanken und die Notwendigkeit mit entfernten Peripheriegeräten zu kommunizieren, führte schon vor einigen Jahren zu nahezu unlösbaren Verkabelungsproblemen. Mit der individuellen Verkabelungstechnik konnte die oft verlangte Flexibilität nicht befriedigend gewährleistet werden.

Ausgehend von der typischen Struktur und Verteilung von Datenverarbeitungsanlagen werden folgende Anforderungen an ein Datennetz gestellt:

a) Standardschnittstellen (z.B. V24 asynchron) sollen an den Geräteinterfaces vorgesehen sein.

b) Jede physische Anschlussstelle im Datennetz soll durch minimale Manipulation mit jeder anderen Anschlussstelle verbunden werden können. Die dazu erforderliche hohe Flexibilität und leichte Konfigurierbarkeit sollen durch Implementation von Stand-

leitungen einerseits erzielbar sein, anderseits soll die Implementation temporärer Verbindungen, ohne Unterbrechung des Netzbetriebes möglich sein.

Die Steuerung des Verbindungsaufbaues soll entweder durch einen zentralen Vermittlungsrechner oder durch intelligente Geräteinterfaces oder manuell von jeder Station aus erfolgen können, wozu Zuordnungseinrichtungen (routing units) vorgesehen sind.

c) Viele verfügbare Datenkanäle mit mittlerer Datenrate und High Speed Kanäle sollen bei frei wählbarer Datenrate an den Geräteschnittstellen implementierbar sein.

d) Protokolltransparenz ist erwünscht, d.h. jedes end to end Protokoll soll im Datenring implementierbar sein, der Datenring soll sich wie eine physikalische Verbindung verhalten (kein Store and Forward Betrieb) und ferner soll das System absolute Unempfindlichkeit gegenüber Protokollsteuerzeichen aufweisen.

e) Hohe Zuverlässigkeit und kleine Restfehlerrate durch Verwendung eines optischen Mediums (galvanische Entkopplung zwischen den einzelnen Ringstationen), Fehlererkennung, Fehlerortung und Diagnose bis zum Geräteinterface, sowie zentrale Dokumentation aller Fehler und Betriebsstörungen sollen möglich sein.

Diese Aufgabe wird bei dem Verfahren der eingangs genannten Art erfindungsgemäss dadurch gelöst, dass bei Betriebsbeginn oder nach fehlerbedingter Ringunterbrechung dem datenfreien Übertragungsrahmen in einem festgelegten Slot, vorzugsweise am Anfang, eine charakteristische Synchronisationskennung aufgeprägt wird, dass dieser keine Daten enthaltende Übertragungsrahmen erforderlichenfalls wiederholt in den Datenring eingespeist wird, dass das Eintreffen der Synchronisationskennung in den einzelnen Stationen als Anfangspunkt einer Zählung des Stationstaktes bzw. der Slots gewertet wird bzw. die Zähler in den Stationen rückgesetzt werden, dass nach Durchlauf aller Stationen bzw. Setzen aller Zähler dem Übertragungsrahmen von der Master-Station in einem festgelegten Slot, vorzugsweise am Anfang, ein Übertragungsflag aufgeprägt wird, das sich vorteilhafterweise von der Synchronisationskennung unterscheidet und vorteilhafterweise demselben Slot wie die Synchronisationskennung aufgeprägt wird, dass zur Überprüfung der Synchronisation, ohne eine Neusynchronisation vorzunehmen bei allen neuerlichen Durchläufen des Übertragungsrahmens durch die Stationen in jeder Station nur zu Soll-Zeitpunkten bzw. in Zeitabständen, die dem Durchlauf eines gesamten Übertragungsrahmens entsprechen, das zeit- bzw. taktrichtige Eintreffen der Synchronisationskennung überprüft wird, indem der zum Soll-Zeitpunkt eingetroffene Slotinhalt mit einem vorgegebenen Muster verglichen wird, das bei Übereinstimmung bzw. positivem Prüfergebnis jede Station den Rahmen mit dem entsprechenden von der Master-Station aufgeprägten Übertragungsflag weitergibt, dass bei zeitrichtigem Eintreffen der Synchronisationskennung und der aufgeprägten Übertragungsflags die Entnahme von Daten aus den und die Eingabe von Daten in die jeweils hiefür vorgesehenen Slots des Übertragungsrahmens freigegeben werden, so dass mit der Übertragung von Daten in dem der Synchronisation aller Stationen zueinander folgenden Umlauf begonnen wird, dass bei der Synchronisation folgenden Umläufen des Übertragungsrahmens zur Feststellung der Synchronisation des Datenringes nur das zeitgerechte Eintreffen der Synchronisationskennung bzw. zur Feststellung der Freigabe der Datenübertragung nur das Übertragungsflag festgestellt bzw. überprüft wird, dass die Zeitdauer des Übertragungsrahmens bzw. allfälliger Vielfacher davon grösser gewählt wird, als die Zeitdauer eines Durchlaufes des Übertragungsrahmens durch den Ring und dass, vorzugsweise in der Master-Station, dieser Zeitdifferenz entsprechende Teile eines oder mehrerer Übertragungsrahmen bis zu ihrer neuerlichen Einspeisung in den Datenring gespeichert bzw. gepuffert werden.

Eine Anordnung der eingangs genannten Art zur Durchführung dieses Verfahrens ist erfindungsgemäss dadurch gekennzeichnet, dass an die jeweiligen Ein-Ausgabe-Einrichtungen zur Festlegung der zum Austausch der zu übertragenden Daten der jeweiligen Station bzw. Master-Station zur Verfügung stehenden Slots eine Slot-Zuordnungseinrichtung angeschlossen ist, dass der Generator einen einem datenfreien Übertragungsrahmen eine Synchronisationskennung aufprägenden Flag-Generator umfasst, mit dem dem Übertragungsrahmen ein Übertragungsflag aufprägbar ist, dass die Synchronisationseinrichtung in der Master-Station zur Erkennung der Synchronisation aller Stationen und zur Einleitung der Einspeisung von Übertragungsrahmen, die zu übertragende Daten enthalten einen Rahmenformatzähler umfasst, welcher Zähler beim ersten Eintreffen einer Synchronisationskennung von einem Flag-Detektor rücksetzbar ist und die einem Durchlaufen des gesamten Übertragungsrahmens entsprechende Zeitdauer bis zum Eintreffen einer mit einem abgesandten Übertragungsrahmen wiedereintreffenden Synchronisationskennung misst, dass mit dem Flag-Detektor zu dem vom Zähler vorgegebenen Zeitpunkt eingetroffene Slot-Inhalte mit einem gespeicherten Muster einer Synchronisationskennung vergleichbar sind, dass der Flag-Generator mit dem Flag-Detektor verbunden ist und bei positivem Vergleichsergebnis dem Flag-Generator vom Flag-Detektor ein Signal zur Aufprägung eines Übertragungsflags zuführbar ist, dass in jeder Station als Synchronisationseinrichtung ein beim ersten Eintreffen einer im Übertragungsrahmen enthaltenen Synchronisationskennung von einem Flag-Detektor auf einen Anfangswert rücksetzbarer Rahmenformatzähler vorgesehen ist, dass zu einem vom Zähler vorgegebenen, dem Durchlauf eines gesamten Übertragungsrahmens entsprechenden Zeitpunkt das Eintreffen einer Synchronisationskennung im Flag-Detektor überprüfbar ist, dass die Ein-Ausgabe-Einrichtungen von einer Steuereinrichtung bei vom Flag-Detektor erkannten zeitgerechten Eintreffen einer Synchronisationskennung und eines Übertragungsflags in einem Übertragungsrahmen zum Datenaustausch freigegeben sind und dass in der Master-Station, vorteilhafterweise zwischen die Ein-Ausgabe-Einrichtung und die Mediumschnittstelle, die den Übertragungsrahmen mit gegebenenfalls geändertem Informationsinhalt unmittelbar dem vorangehenden Rahmen folgend erneut in das Medium einspeist, ein Zwischenspeicher für zumindest einen Teil des Übertragungsrahmens zwischengeschaltet ist.

Beim Erfindungsgegenstand erfolgt anfänglich eine einmalige Synchronisation der Stationen durch Starten des Rahmenformatzählers; bei jedem folgenden Eintreffen eines Übertragungsrahmens werden nur zu dem erwarteten Zeitpunkt des Eintreffens einer Synchronisationskennung die zu diesem Zeitpunkt erhaltenen Daten überprüft, ob sie eine Synchronisationskennung darstellen. Dies hat den grossen Vorteil, dass im Übertragungsrahmen auch Daten enthalten sein können, die denselben Aufbau wie die Synchronisationskennung besitzen. Gleichzeitig mit der Überprüfung des zeitrichtigen Eintreffens der Synchronisationskennung wird das richtige Eintreffen der Übertragungsflag überprüft, das von der Master-Station gesetzt wurde. Das Übertragungsflag wird in den Stationen unverändert weitergegeben, wenn die Synchronisationskennung zeitgerecht eingetroffen ist. Beim Erfindungsgegenstand wird ferner dem Übertragungsrahmen als Folge der Synchronisation nur ein Signal aufgeprägt, das eine Datenübertragung für den jeweiligen Übertragungsrahmen freigibt. Die Datenzuordnung wurde vor dem Durchlauf des jeweiligen Übertragungsrahmens bereits festgelegt. Beim Erfindungsgegenstand wird eine Datenübertragung in einer Station bereits beim ersten Durchlauf über Übertragungsrahmen nach der Synchronisation möglich, wenn in dieser Station das zeitrichtige Eintreffen der Synchronisationskennung festgestellt wurde. Insbesondere ergibt sich der Vorteil, dass eine REAL-TIME-Übertragung von Signalen möglich wird, da der Übertragungsrahmen kontinuierlich wiederholt und weitergeleitet wird. Es sind alle Codes verwendbar, die Takt und Daten gleichzeitig übertragen; Arbitrationsprobleme entfallen und die Übertragungszeiten sind kurz und konstant. Der Overhead durch die üblicherweise erforderliche Übertragung von Sender- und Empfängeradressen zusätzlich zu der zu übertragenden Information entfällt.

Bevorzugte Ausführungsformen der Erfindung sind der folgenden Beschreibung, den Unteransprüchen und der Zeichnung zu entnehmen.

Im folgenden wird die Erfindung anhand der Zeichnung beispielsweise näher erläutert. Es zeigen:

Fig. 1 eine prinzipielle Anordnung zur Informationsübertragung in einem Datenring mit einer Master-Station und einer Anzahl von weiteren Stationen,

Fig. 2 einen Übertragungsrahmen,

Fig. 3 ein Prinzipschaltbild einer Master-Station und

Fig. 4 ein Prinzipschaltbild einer Station.

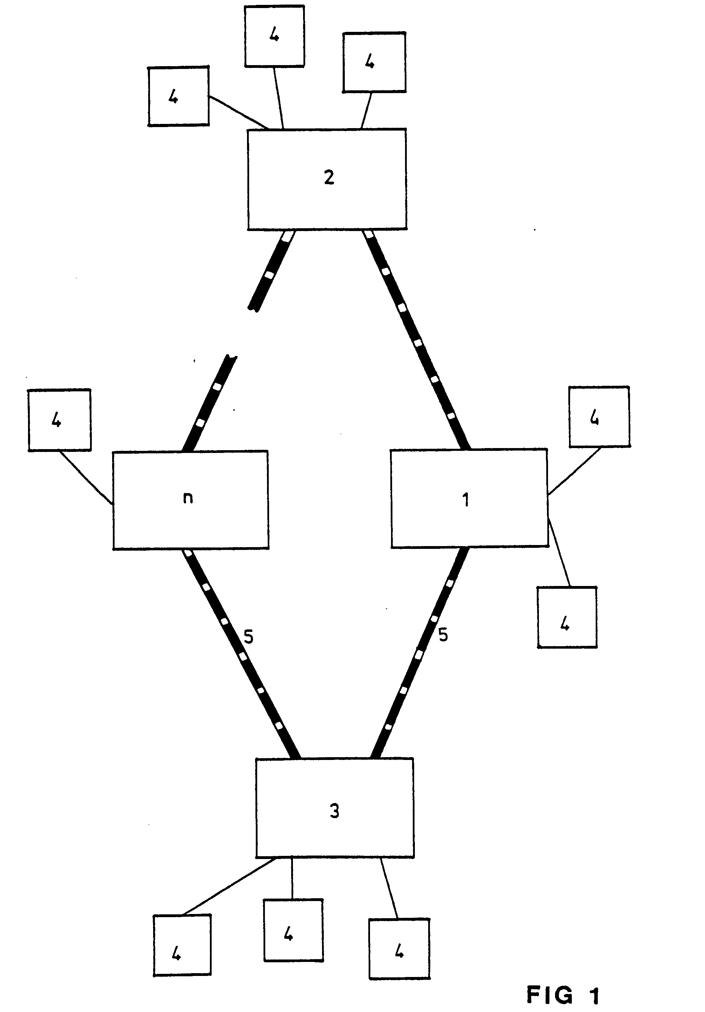

Wie Fig. 1 zeigt, bilden Stationen 1, 2 ... n einen Datenring, in dem zwischen den einzelnen Stationen 1, 2 ... n und einer Master-Station 3 über ein Übertragungsmedium 5 Informationen übertragen werden. Es sind zur Ausbildung des Datenringes zumindest eine Station und eine Master-Station notwendig. Die Anzahl der Stationen, von denen zumindest eine eine Master-Station ist, kann jedoch beliebig gross werden.

den. Die Master-Station 3 initialisiert den Datenring, überwacht und kann, wenn nichts anderes vorgesehen ist, den Datentransfer zwischen den einzelnen Stationen sowie zwischen sich selbst und den Stationen steuern. Jede der Stationen 1, 2 ... n kann über Portmodule 19 zu übertragende Daten von beliebig gestalteten Peripheriegeräten 4 (Rechnern, Steuerungen usw.) entgegennehmen und an ein beliebiges anderes Peripheriegerät 4 bei der gleichen oder einer anderen Station übermitteln. Hierbei werden die Daten bzw. Informationen vom Peripheriegerät 4 in die Station eingegeben, diese führt eine Weiterleitung über den Datenring bzw. das die Stationen verbindende Übertragungsmedium 5 (Kabel, Lichtleiter, Elektrolyt usw.) zu anderen Stationen bzw. zu sich selbst, bzw. andere an sie angeschlossene Peripheriegeräte 4 durch, wobei die Informationen von den empfangenen Stationen den entsprechenden ihnen zugeordneten Peripheriegeräten ausgegeben werden. Die Zuordnung der miteinander verkehrenden Peripheriegeräte kann fix vorgegeben sein (durch Hardware) oder temporär, z.B. durch entsprechende Befehlseingabe bzw. Zuordnungseinrichtungen (routing units) festgelegt werden. Immer ist jedoch vor einer Datenübertragung die Zuordnung festgelegt, so dass der Übertragungsrahmen keine Adressen bzw. kein Protokoll enthalten muss. Die Ringstruktur ergibt für die Stationsverknüpfung, verglichen mit anderen Konfigurationen (z.B. Sternkonfigurationen), die kürzesten Verkabelungslängen. Weiters ist auch die leichte Erweiterbarkeit der Konfiguration durch das Einfügen zusätzlicher Stationen ein Vorteil der Ringstruktur.

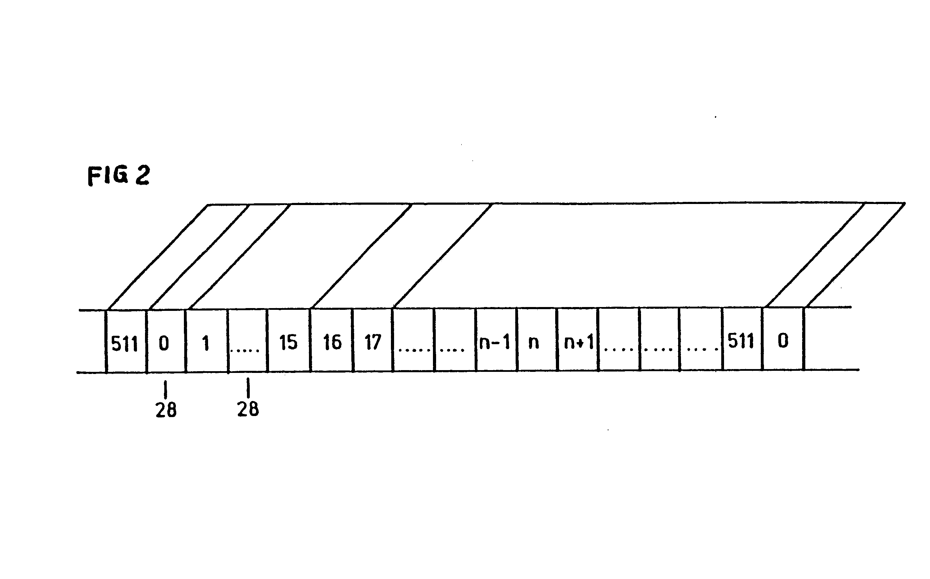

Fig. 2 zeigt den Aufbau eines zwischen den Stationen im Datenring weitergegebenen Übertragungsrahmens bzw. Informationsblocks. Der mit beliebiger Länge festlegbare Rahmen weist im vorliegenden Fall 512 gleichlange Slots (Zeitsektoren) 28 auf, die entsprechend von 0 - 511 durchnumeriert wurden. Im ersten Slot mit der Nummer 0 ist im vorliegenden beispielsweisen Fall dem Übertragungsrahmen ein Signal aufgeprägt, das aus einer Anzahl insbesondere aufgrund ihrer Konfiguration Übertragungsfehler erkennbar machender Bits besteht. Dazu sind die Bits derart angeordnet, dass ein Vor- oder Nacheilen des Signals gegenüber einem mit ihm verglichenen, in den Stationen enthaltenen identen Muster, insbesondere um bis zu zwei Takten, feststellbar ist bzw. dass eine Signalverschiebung bei Überprüfung in einem Flag-Detektor mit dem Muster als taktverschoben erkennbar ist. Eine Anzahl von weiteren Bits (Statusbits) oder dieselben Bits mit geändertem Signalinhalt, in diesem beispielsweisen Fall ebenfalls im Slot mit der Nummer 0 angeordnet, wird verwendet, um Informationen zu übertragen, die einem bestimmten Status des Datenringes entsprechen bzw. bestimmte Funktionen im Datenring herstellen bzw. mitteilen sollen, so z.B. eine Synchronisation des Datenringes oder die Übertragung der Datenentnahme- und Datenimpulsfreigabe aus bzw. in die mit Informationen beladbaren Slots des Übertragungsrahmens. Je nach Art der Signale sowie der Statusbits wird im folgenden von einer Synchronisationskennung, einem Übertragungsflag(kennung) bzw. einer Fehlerkennung gesprochen. Diese Kennungen müssen nicht am Anfang des Übertragungsrahmens liegen und können auch länger als ein Slot sein. Auch eine an beliebiger Stelle des Rahmens aufgeprägte Information kann das Signal «Ring geschlossen» bzw. «Datenfreigabe» mitteilen und mit einer anderen Information gemeinsam eine Kennung bilden. Vorteilhafterweise werden jedoch derartige Kennungen am Anfang des Rahmens aufgeprägt.

Die Information wird im Datenring in einem Zeitmultiplexverfahren mit festem Rahmenformat übertragen. Die Datenrate in einem Lichtwellenleiter beträgt z.B. 6.144 Mbit/s. Der in Fig. 2 dargestellte Rahmen besteht z.B. aus 512 Timeslots mit einer Breite von z.B. je 10 Bits, wobei die maximale Übertragungszeit für ein 10 Bit-Wort etwa der Umlaufzeit eines Rahmens (etwa 1 ms) entspricht. Die Rahmen werden ohne Unterbrechung übertragen, d.h. nach slot 511 des letzten in den Ring eingespeisten Rahmens folgt unmittelbar Slot 0 des folgenden identen Rahmens.

Zur Kodierung der Rahmendaten wird bevorzugterweise der Biphase-Code verwendet. Dadurch wird die Rückgewinnung des Bittaktes vereinfacht und die Fehlerüberwachung verbessert. Bemerkt wird, dass bei Betriebsbeginn bzw. nach Fehlerfeststellung ein lediglich die Synchronisationskennung enthaltender Übertragungsrahmen ohne weitere Benutzerinformationen bzw. zu übertragende Daten übertragen wird.

Von den 512 im Rahmen enthaltenen Slots werden im vorliegenden Fall 18 für die Steuerung und Überwachung des Ringes verwendet. Ein Slot enthält die Synchronisationskennung für die anfängliche Ring-Synchronisation oder das Übertragungsflag für die Ringfreigabe zur Datenein- ausgabe sowie die gleichzeitige Synchronisationsüberprüfung. 2 Slots dienen für Hardwaremeldungen und 15 Slots für das Ringmanagement bzw. den Verbindungsauf- und -abbau zwischen den Stationen, aber nicht für eine Zuordnung der in demselben Übertragungsrahmen enthaltenen Daten zu bestimmten Stationen bzw. Devices.

Jeder der übrigen Slots des Rahmens ist geeignet, einen aufgrund der Ringstruktur bidirektionellen, fullduplexfähigen Kanal mit maximal 9600 bit/s zu bedienen.

Bemerkt wird, dass der Übertragungsrahmen an sich eine nahezu beliebige Länge besitzen kann und dass er in eine ganzzahlige Anzahl beliebig grosser Slots unterteilbar ist. Auch können unbenützte Slots für grösseren Datenanfall in Reserve gehalten werden.

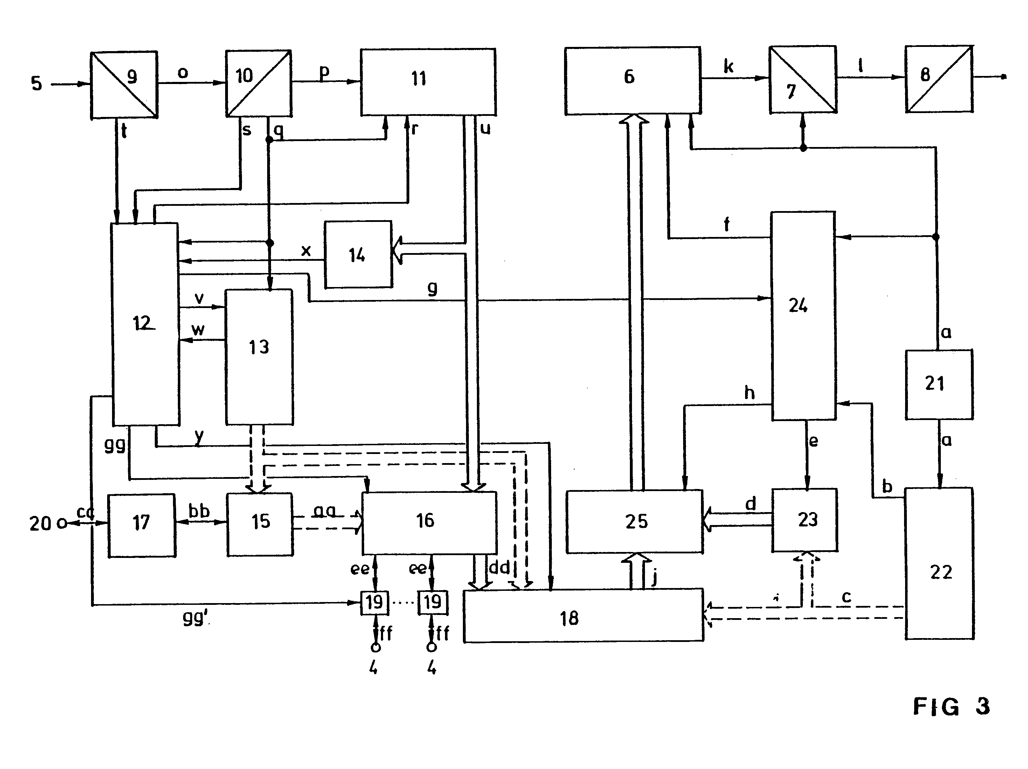

Die Master-Station 3 besitzt gemäss Fig. 3 einen ständig laufenden Taktgenerator 21, der alle für die Anordnung erforderlichen Taktsignale liefert und diese über a einem Rahmenformatzähler 22 einer zentralen Steuereinheit 24, einer Dateneinleseeinheit 6 und einer Codiereinrichtung 7 zuführt. Der an den Taktgenerator 21 angeschlossene Rahmenformatzähler 22 unterteilt einen vorgegebenen Übertragungsrahmen (Fig. 2) in einzelne Slots, die einzelne Datenbits enthalten, und legt den Zeitpunkt der jeweiligen Abgabe bzw. der Generierung einer Synchronisationskennung bzw. eines Übertragungsflags in einem oder mehreren Slots über b in der zentralen Steuereinheit 24 fest. Die gerade bei Übertragung des Rahmens aktuelle Slot-Nummer liegt am Ausgang c des Rahmenformatzählers 22 an und wird sowohl einem Flag-Generator 23 als auch einem Zeitausgleichsmemory bzw. Zwischenspeicher 18 zugeführt. Der Flag-Generator 23 gibt zu entsprechenden, von der zentralen Steuereinheit 24 über e vorgegebenen Zeiten am Ausgang d die Synchronisationskennung bzw. das Übertragungsflag, gegebenenfalls auch eine Fehlerkennung, in Abhängigkeit vom jeweiligen Ringzustand (Status) vorzugsweise zu Beginn der Übertragung des Rahmens bzw. zum Zeitpunkt der Slot-Nummer 0, ab, das einer Datenauswahleinrichtung 25 zugeführt wird, die mit dem Ausgang h der zentralen Steuereinheit 24 und dem Zwischenspeicher 18 verbunden ist. Bei Betriebsbeginn wird die Synchronisationskennung vom Flag-Generator 23 abgegeben.

Die zentrale Steuereinheit 24 steuert den Datentransfer in der Datenauswahleinrichtung 25 über den Ausgang h, die Abläufe in der Dateneinleseeinheit 6 über die Leitung f in Abhängigkeit des Ringbetriebszustandes, welche Information über g von einer Steuereinrichtung 12 eintrifft. Über e wird ferner das bzw. die Statusbit(s) in der Kennung gesteuert bzw. gesetzt bzw. die Synchronisationskennung in ein Übertragungsflag (Datenübertragungsfreigabe) überführt.

Die I/O Datenauswahleinrichtung 25 bietet in Abhängigkeit von über h eintreffenden Signalen die über j einlangenden Daten des Zeitausgleichsmemory bzw. Zwischenspeichers 18 bzw. die über d einlangenden Daten des Flag-Generators 23 über i der Dateneinleseeinheit 6 als Ausgabedaten an.

Die in paralleler Form über i in der Dateneinleseeinheit 6 einlangenden Daten werden unter Zuhilfenahme des von der zentralen Steuereinheit 24 über f einlangenden Steuersignals und des vom Taktgenerator 21 über a eintreffenden Taktes in serielle Informationen umgewandelt und über k an die Codiereinrichtung 7 weitergegeben.

Die Codiereinrichtung 7 verknüpft die über k ankommende Dateninformation und den über a eintreffenden Takt zu einem selbstclockenden Takt-Datensignal, das über l einer Mediumschnittstelle 8 zugeführt ist, in der das codierte Takt-Datensignal auf eine für das Übertragungsmedium 5 (z.B. Lichtleiter) geeignete Form gebracht wird (z.B. in Lichtimpulse umgesetzt wird).

Über das Übertragungsmedium 5 wird der generierte Rahmen der Reihe nach an die Stationen 1, 2 ... n übertragen und gelangt an die Master-Station 3 zurück, die eine Empfangseinrichtung 9 für einlangende Übertragungsrahmen aufweist. Das vom Übertragungsmedium 5 eintreffende Signal wird in ein elektrisches, im selbstclockenden Code codiertes Takt-Datensignal überführt und über o einer Decodiereinrichtung 10 zugeführt. Ein Ausbleiben des Rahmens bzw. einer erwarteten Synchronisationskennung bzw. eines erwarteten Übertragungsflag-Signals wird über t der Steuereinrichtung 12 gemeldet.

In der Decodiereinrichtung 10 wird das empfangene Takt-Datensignal in Takt und Daten zerlegt. Der Takt wird über g einem Rahmenformatzähler 13, der Steuereinrichtung 12 und einer von einem Schieberegister gebildeten Datenentnahmeeinheit 11 zugeführt. Die Daten werden über p dem Schieberegister 11 zugeführt. Ein Ausbleiben des Takt-Daten-Signals wird über s an die Steuereinrichtung 12 gemeldet.

Die serielle Empfangsdateninformation wird über p durch über q übertragenen Takt und das von der Steuereinrichtung 12 über r übertragene Steuersignal gesteuert in das Schieberegister 11 übernommen und als Empfangsdaten in paralleler Form bei u angeboten.

Der Ausgang u des Schieberegisters 11 ist mit einem Flag-Detektor 14 und der I/O Ein-Ausgabe-Einrichtung 16 verbunden.

Der Übertragungsflag-Detektor 14 untersucht durch Vergleich mit vorgegebenen Mustern die am Ausgang u anliegenden Daten auf das Auftreten des Bit-Musters einer Synchronisationskennung bzw. eines Übertragungsflags bzw. einer Fehlerkennung und meldet über Flag-Status x das Auftreten einer derartigen Zeichenfolge und den in der Folge enthaltenen Ring-Status an die Steuereinrichtung 12. Der Status gibt an, ob der Datenring unterbrochen ist (Fehlerkennung) oder ob ein synchroner Datentransport erfolgt ist (Übertragungsflag) oder ob der Ring synchronisiert wurde (Synchronisationskennung).

Die Steuereinrichtung 12 unterscheidet drei Betriebsfälle:

Betriebsfall a): Datenring arbeitet nicht synchron.

Die Steuereinrichtung 12 beobachtet zu Betriebsbeginn bzw. nach einer Ringunterbrechung das Status-Signal bei x in Hinblick darauf, ob eine gültige Synchronisationskennung erkannt wird. Im Falle des Erkennens einer gültigen Synchronisationskennung (durch Vergleich) wird ein Signal zum Rücksetzen generiert und über v dem Rahmenformatzähler 13 zugeführt, der dann mit dem Takt des eingelangten Rahmens synchronisiert wird und das zeitrichtige Eintreffen weiterer Kennungen bzw. Ring-Status-Signale überprüft und dazu jeweils über w der Steuereinrichtung 12 entsprechende Rückmeldung über den Taktzeitpunkt eines zu erwartenden Ring-Status-Signals macht. Wenn das Ring-Status-Signal allerdings meldet, dass der Datenring unterbrochen wurde, gilt Betriebsfall c), ansonsten wird in der Steuereinrichtung 12 das Signal «Ring geschlossen» generiert und der zentralen Steuereinheit 24 zugeführt.

Es gilt sodann Betriebsfall b).

Betriebsfall b): Datenring gemäss Synchronisationskennung als geschlossen gemeldet (Beginn der Datenweitergabe im Ring).

Es wird von der Steuereinrichtung 12 überprüft, ob das Übertragungsflag immer zum erwarteten Zeitpunkt eintrifft, wozu der Ausgang w des die Rahmentakte überprüfenden Rahmenformatzählers 13 abgenommen wird. Solange der Status bei x besagt, dass der Ring synchron ist und keine andere Fehlermeldung (t, s) an die Steuereinrichtung 12 gemeldet wird, wird durch ein Enable-Signal über gg der Datentransfer durch die I/O Ein-Ausgabe-Einrichtung 16 erlaubt und die Datenübergabe von den Port-Moduln 19 an die Peripheriegeräte 4 freigegeben.

Bei Auftreten eines Fehlers (kein Empfang, fehlender Takt, kein Übertragungsflag zum erwarteten Zeitpunkt) wird der Datentransfer über gg unterbrochen und der Betriebsfall a) tritt ein.

Betriebsfall c): Ring unterbrochen.

Es wird über w überprüft, ob ein Übertragungsflag zum erwarteten Zeitpunkt eintrifft.

Solange der bei x anliegende Status besagt, dass der «Ring unterbrochen» ist, herrscht Betriebsfall c).

Bei Auftreten eines der genannten Fehler in der Station selbst gilt Betriebsfall a).

Bei einem bei x anliegenden Status «Ring geschlossen» gilt Betriebsfall b).

Weiters steuert die Steuereinrichtung 12 die Datenübernahme in den Zwischenspeicher 18.

Der an die Steuereinrichtung 12 und an eine Slotzuordnungseinrichtung 15 angeschlossene Rahmenformatzähler 13 gibt am Datenausgang z Auskunft über die Nummer bzw. Position der gerade aktuell einlangenden Slots.

Die Zuordnungseinrichtung 15 enthält und verwaltet die Information, wer mit wem auf welchen Slot des Übertragungsrahmens Daten austauschen darf und versorgt zum gegebenen Zeitpunkt, der vom Rahmenformatzähler 13 über z abgeleitet wird, über aa die I/O Eingabe-Ausgabe-Einrichtung 16 mit dieser Information bzw. gestaltet oder unterbindet die Dateneingabe- oder -entnahme für den aktuellen Slot.

Die Mitteilungen von der Zuordnungseinrichtung 15 an die I/O Ein-Ausgabe-Einrichtung 16 der Stationen bzw. der Master-Station erfolgen entweder über eigene Steuerleitungen oder werden als zu übertragende Daten in den Übertragungsrahmen eingegeben. Diese Eingabe erfolgt jedoch derart, dass in einem Übertragungsrahmen eingegebene Daten zur Steuerung der Datenentnahme frühestens für zu übertragende Daten im nächstfolgenden Übertragungsrahmen Gültigkeit haben.

Die I/O Ein-Ausgabe-Einrichtung 16 steuert die Datenübergabe an einen I/O Port-Modul 19 und das in Abhängigkeit von der Adresseninformation aa der Zuordnungseinrichtung 15 und dem Enable-Signal gg der Steuereinrichtung 12.

Die Daten werden nach etwaiger Modifikation durch Interface- bzw. Port-Module 19 über dd dem Zwischenspeicher 18 angeboten.

Der Zwischenspeicher 18 bildet einen Datenpuffer. Da die Übertragungszeit des Rahmens (der Rahmen) im Datenring immer kleiner ist als die Zeitdauer der Eingabe des (der) Rahmens in den Datenring, müssen diese Zeitunterschiede kompensiert werden, wozu der Zwischenspeicher 18 dient. Die Dauer des (der) zu übertragenden Rahmens muss grösser sein als die Übertragungszeit im Datenring, da ansonsten eine unmittelbare Aufeinanderfolge der Rahmen nicht möglich ist.

Die I/O Port-Module 19 wandeln das von der I/O Ein-Ausgabe-Einrichtung 16 bei ee angebotene Datenformat auf ein für die über ff angeschlossenen Peripheriegeräte 4 verständliches Format um und geben die Daten im Fall von gg an die Peripheriegeräte 4 weiter. Allerdings kann auch die Datenabgabe aus der Station bzw. von den Port-Moduln 19 an die Peripheriegeräte 4 so lange verzögert werden, bis über gg' bzw. o'' von der Steuereinrichtung 12 ein Freigabesignal eintrifft, das von der Steuereinrichtung 12 dann abgegeben wird, wenn von ihr ein dem Übertragungsrahmen, dem die Information entnommen wurden, folgendes Übertragungsflag überprüft und als fehlerfrei erkannt wurde. Es kann somit die I/O Ein-Ausgabe-Einrichtung 16 bzw. 26 gesperrt bzw. die Signalabgabe an die Port-Module 19 verzögert werden.

Eine gegebenenfalls vorhandene Zuordnungsabänderungseinrichtung 17 kann die in der Slot-Zuordnungseinrichtung 15 enthaltenen Tabellen bezüglich der Zuordnung der Slots im Rahmen zu zwei oder mehr Devices 4 modifizieren und somit temporäre (nicht durch Hardware vorgegebene) Verbindungen erzeugen, die gegebenenfalls über cc von einer Eingabeeinheit 20 festlegbar sind.

Zu Beginn einer Datenübertragung bzw. beim Einschalten bzw. am Ausgangspunkt der Datenübertragung ist der Ring unterbrochen bzw. bei der Empfangseinrichtung 9 wird kein Signal empfangen. Über t wird dies der Steuereinrichtung 12 gemeldet. Gleichzeitig läuft der Taktgenerator 21. Folgender Funktionsablauf tritt ein:

1. Der Taktgenerator 21 beginnt einen eine gewisse Anzahl Takte enthaltenden Rahmen zu generieren und zu einem durch den Rahmenformatzähler 22 bei b definierten Zeitpunkt generiert der Flag-Generator 23 eine Synchronisationskennung, die dem Rahmen aufgeprägt wird. Diese Kennung ist gefolgt von leeren bzw. keine Daten tragenden Slots, wobei nach dem letzten Slot des Rahmens gleich wieder einem neu generierten, identischen Rahmen eine gleiche Kennung oder ein Übertragungsflag (wenn Ring schon als geschlossen erkannt wurde aufgrund des Wiedereintreffens einer ausgesandten Synchronisationskennung in der Master-Station) aufgeprägt wird usw.

Die Datenauswahleinrichtung 25 bringt diese Rahmeninformationen in ein Schieberegister 6, das als Dateneinleseeinheit fungiert. Daraufhin werden die einzelnen Rahmendaten in der Codiereinrichtung 7 mit dem über a vom Taktgenerator 21 eintreffenden Takt verknüpft und über die Medium-Schnittstelle 8 in das Übertragungsmedium 5 gespeist.

2. Der keine Informationen enthaltende Übertragungsrahmen durchläuft den Datenring und trifft nach diesem Durchlauf bei der Empfangseinrichtung 9 ein. Sobald die Empfangseinrichtung 9 auf dem Übertragungsmedium 5 die reinen Takt-Daten erkennt, startet die Steuereinrichtung 12 die Suche nach einer Synchronisationskennung. Ferner werden der Takt bei q und die Daten bei p getrennt und die Daten in die Datenentnahmeeinheit 11 eingespeist.

3. Gleichzeitig erfolgt die Meldung über g, dass der Ring geschlossen ist und das Signal gg «Enable Datentransfer» wird generiert.

Ferner meldet der Flag-Detektor 14 eine auftretende Synchronisationskennung über x an die Error- und Control-Logik 12.

4. Die Steuereinrichtung 12 setzt den Rahmenformatzähler 13 in Übereinstimmung mit einem von der Synchronisationskennung vorgegebenen Zeitpunkt auf Null oder Anfangsstand zurück. Dieser liefert ab diesem Zeitpunkt die Kenn-Daten bzw. Nummern des jeweils am Ausgang u der Datenentnahmeeinheit 11 liegenden Slots über den Slot-Daten-Bus z an die Slot-Zuordnungseinrichtung 15 bzw. an den Zwischenspeicher 18.

5. Der Rahmenformatzähler 13 liefert zum Soll-Zeitpunkt des Eintreffens der Synchronisationskennung das Signal «Flag erwartet» bei w. Wenn zu diesem Zeitpunkt nicht eine Synchronisationskennung bei x als erkannt gemeldet wird bzw. erscheint, beginnt der Vorgang wieder mit 3., da ein Fehler vorliegen muss. Wenn eine Kennung zum richtigen Zeitpunkt erscheint, aber eine Fehlerkennung ist, wird 4. wiederholt. Trifft eine richtige Synchronisationskennung ein bzw. wird keine Fehlerkennung festgestellt, wird über g der zentralen Steuereinheit 24 mitgeteilt, dass der Ring geschlossen und synchron ist und es wird der Datentransfer erlaubt, wie bei 7. beschrieben.

6. Wenn die zentrale Steuereinheit 24 das Status-Signal «Ring geschlossen» über g erkennt, setzt sie über e im Slot mit den Kennungen die Kennung «Übertragungsflag» bzw. den Status «Enable Datentransfer» entsprechend der Vorgangsweise 9.

7. Falls eine Datenübertragung in der Master-Station 3 intern an einen Interface- bzw. Port-Modul 19 oder an eine Station gewünscht wird und von der Zuordnungseinrichtung 17 für diese Übertragung ein oder mehr Slots des Rahmens zugewiesen wurden, kann, wenn eine Synchronisationskennung im Flag-Detektor 14 erkannt und dies über gg der Ein-Ausgabe-Einrichtung 16 angezeigt wurde, die zentrale Steuereinheit 24 einen Datentransfer beginnen, d.h. die auf u in der Datenentnahmeeinheit 11 anstehenden Daten werden über ee an I/O Port-Module 19 geleitet und/oder von I/O Port-Modulen 19 kommende Daten werden entgegengenommen bzw. in den Rahmen aufgenommen.

8. Die von u kommenden Daten werden — im Fall von 7. gegebenenfalls verändert — ansonsten aber unverändert im Zwischenspeicher 18 allesamt abgelegt und unter Steuerung der zentralen Steuereinheit 24 zum gegebenen Zeitpunkt über die Datenauswahleinrichtung 35 der Dateneinleseeinheit zur Einspeisung in das Übertragungsmedium 5 zugeführt.

9. Nach Erkennen des Statussymbols «Ring geschlossen» in der Synchronisationskennung prägt der Flag-Generator 23 dem nächsten Übertragungsrahmen ein geändertes Statussymbol im Slot mit den Kennungen auf, der sodann das Übertragungsflag bildet, das bei Empfang in den Stationen bzw. nach Rückkehr zur Master-Station den Datentransfer zulässt. Es werden so lange Rahmen mit «Ring-geschlossen»-Signalen bzw. Übertragungsflag in das Übertragungsmedium 5 eingespeist, bis ein Fehler erkannt wird bzw. eine Fehlerkennung eintrifft.

Wenn ein Übertragungsflag mit «Ring Synchron»-Status in das Übertragungsmedium 5 ausgesendet und wieder empfangen wurde, übernimmt die Datenauswahleinrichtung 25 die im Zwischenspeicher 18 abgelegten Daten und übergibt sie jeweils im richtigen Slot bzw. slotweise der Dateneinleseeinheit 6. Somit sind der Ring bzw. seine Stationen nach einer vorerst reinen Synchronisation durch das Aussenden des Übertragungsrahmens ohne zu übertragende Daten auch für den Datentransfer geschlossen, der mit dem der Synchronisierung folgenden, ein Übertragungsflag besitzenden Übertragungsrahmen beginnt.

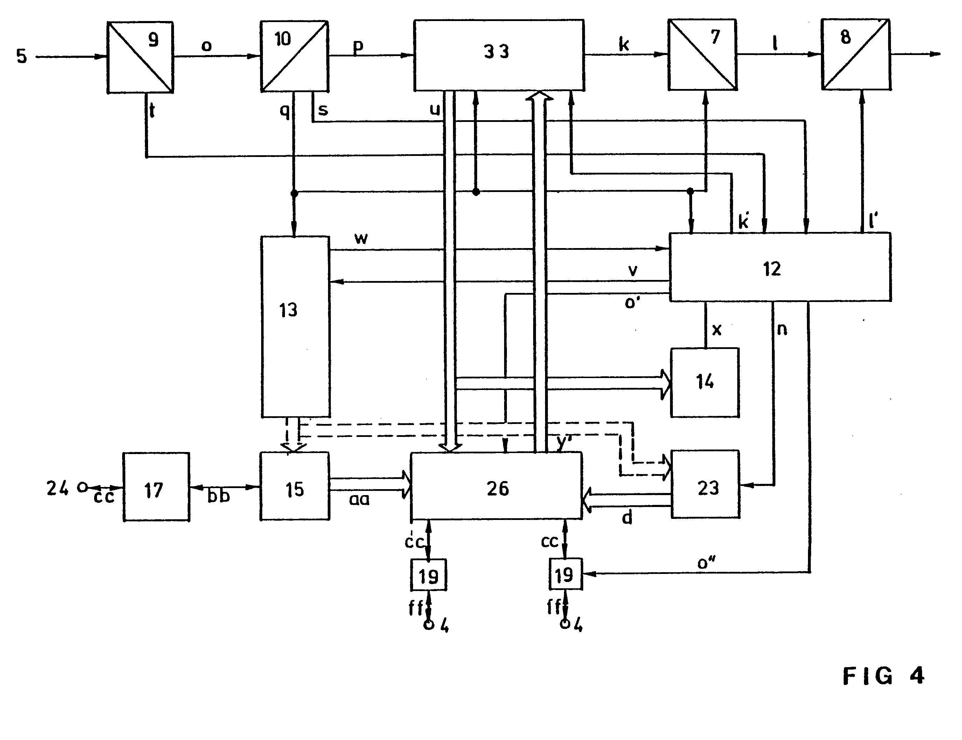

In Fig. 4 ist ein Blockdiagramm einer Station 1 dargestellt, wobei Baueinheiten mit im wesentlichen gleicher Funktion wie in der Master-Station 3 bzw. Leitungen, die im wesentlichen dasselbe Signal bzw. dieselbe Information transportieren, bzw. Ausgänge mit entsprechend gleichen Signalen, mit gleichen Bezugzeichen versehen wurden.

Der in einer Station eintreffende Übertragungsrahmen gelangt über die Empfangseinrichtung 9 an die Dekodiereinrichtung 10 und die Daten wurden nach Abtrennung des Taktes über p in eine Datenaustauscheinheit 33 übernommen, das durch den über q eintreffenden Takt getaktet ist.

Zum Zeitpunkt, wenn die Information eines ganzen Slots in der Datenaustauscheinheit 33 ist, kann durch ein Steuersignal k' der Steuereinrichtung 12 ein Austausch der Daten über u und y' erreicht werden. An u erscheint ständig die gerade in der Datenaustauscheinheit 33 enthaltene Dateninformation. An y' einer Ein-Ausgabe-Einrichtung 26 wird die neu in den in der Datenaustauscheinheit 33 befindlichen Slot zu landende Information zur Verfügung gestellt.

Am Ausgang k der Datenaustauscheinheit 33 erscheint der gegebenenfalls modifizierte Informationen enthaltende Datenrahmen wieder in serieller Form und wird über die Codiereinrichtung 7 der Mediumschnittstelle 8 zugeführt, welche hier zusätzlich die Möglichkeit bietet, im Falle einer Störung durch das Signal ℓ' jeden Output der Station auf das Übertragungmedium 5 zu unterbinden.

Die Steuereinrichtung 12 erhält über x ein Statussignal des Flag-Detektors 14, der angibt, ob eine Synchronisationskennung oder ein Übertragungsflag im eintreffenden Übertragungsrahmen erkannt wurde. Im Fall des Erkennens einer gültigen Kennung wird ein Signal v zum Rücksetzen des Rahmenformatzählers 13 generiert.

Von nun an wird immer zu immer demselben durch w gegebenen Zeitpunkt ein Übertragungsflag in der Steuereinrichtung 12 erwartet und es wird in der Steuereinrichtung 12 überprüft, ob das Übertragungsflag zum erwarteten bzw. durch w gegebenen Zeitpunkt im Flag-Detektor 14 erkannt wird.

Falls eine Synchronisationskennung erkannt wird, wird der Synchronisationsvorgang in der Station von vorne durchlaufen.

Falls das Übertragungsflag als in Ordnung befunden wird, bzw. der Übertragungsflag-Status «Ring geschlossen» angibt, wird über ein Signal o' «Enable Datentransfer» in der Ein-Ausgabe-Einrichtung 26 gesetzt und die Datenübergabe kann einsetzen.

Im Falle eines in der Station selbst auftretenden Fehlers (fehlender Takt, Hardwarefehler usw.) wird über ℓ' der Medium-Schnittstelle 8 der Zugriff zum Übertragungsmedium 5 unterbunden.

Im Falle eines Nichtempfanges eines Übertragungsrahmens wird über ein Signal n im Flag-Generator 23, der über z Rahmeninformationen bzw. die Slot-Daten erhält, ein «Fehlerrahmen» mit einer Fehlerkennung generiert. Die Fehlerkennung enthält Informationen über die Störung bzw. die Station und wird über die Ein-Ausgabe-Einrichtung 26 und y' bzw. die Datenaustauscheinheit 33 in das Übertragungsmedium 5 abgegeben und über alle Stationen zur Master-Station 3 geleitet.

In Abhängigkeit von dem Enable-Signal o' und vom Adresssignal aa der Slot-Zuordnungseinrichtung 15, welches besagt, ob ein bzw. welcher Port-Modul 19 dem aktuellen eingelangten Slot zum Datentransfer zugeordnet ist, werden die anstehenden Slotdaten von u an die Ein-Ausgabe-Einrichtung 26 übertragen bzw. von dieser mit oder ohne Änderungen von Daten durch die Port-Module 19 als Outputdaten über y' der Datenaustauscheinheit 33 angeboten.

Bei Betriebsbeginn besteht in der Station kein Empfang. In diesem Ausgangspunkt läuft der Rahmenformatzähler 13 von einem interen Takt getrieben frei.

Die Steuereinrichtung 12 erkennt über t keinen Empfang bei der Empfangseinrichtung 9, und unterbindet über o' den Datentransfer in der Ein-Ausgabe-Einrichtung 26 und in den Port-Modulen 19 und erlaubt über n dem Flag-Generator 23 das Generieren eines Übertragungsrahmens durch unter Zuhilfenahme des Taktes des Rahmenformatzählers 13, dem vom Flag-Generator die Fehlerkennung aufgeprägt wird und der über die Ein-Ausgabe-Einrichtung 26 an die Datenaustauscheinheit 33 weitergegeben, in der Codiereinrichtung 7 codiert und über 8 an das Übertragungsmedium 5, gegebenenfalls wiederholt, gesendet wird.

Sobald die Empfangseinrichtung 9 Takt-Daten erkennt, werden diese von der Decodiereinrichtung 10 in Takt und Daten getrennt. Die Empfangseinrichtung 9 meldet über t «Empfang» an die Steuereinrichtung 12. Die Daten werden nun in die Datenaustauscheinheit 33 nach deren Freigabe über k' übernommen.

Wenn der Flag-Detektor 14 eine Synchronisationskennung über x meldet, wird der Rahmenformatzähler 13 über v rückgesetzt.

Von nun an wird überwacht, ob zum über w mitgeteilten Erwartungszeitpunkt von Übertragungsflags auch ein Übertragungsflag über x gemeldet wird. Ist dies nicht der Fall, oder wird ein Taktfehler über s gemeldet, so wird jeder Output der Station über 1' unterbunden.

Wird dagegen über x im zeitrichtigen eingetroffenen Übertragungsflag «Ring-Synchron» erkannt, so wird über o' an die Ein-Ausgabe-Einrichtung 26 gemeldet:

«Datenverkehr freigegeben», worauf in der Datenaustauscheinheit 33 befindlichen Slots Daten entnommen bzw. aufgeladen werden können, wobei die Port-Module 19 den jeweiligen Slots unter Steuerung der Slot-Zuordnungseinrichtung 15 zugeordnet werden.

Die Slot-Zuordnungseinrichtung 15 steuert den Datentransfer mit den der Station zugeordneten Slots. Bei Bedarf, z.B. wenn eine Verbindung aufgebaut werden soll, kann bei der entsprechenden Slot-Zuordnungseinrichtung 15 der Master-Station 3 um Zuordnung von einem oder mehr Slots für diese Verbindung angefragt werden, indem in für die Slot-Zuordnung reservierten Slots eine entsprechende Anfrage aufgegeben wird. Über das Übertragungsmedium 5 erfolgt eine Rückmeldung an die Station und eine allenfalls entsprechende Abänderung der Anzahl der Station zugeteilten Slots wird der Slot-Zuordnungseinrichtung 15 mitgeteilt.

Die zugrundeliegende Vorgangsweise ist somit folgende:

Zur Synchronisation der Station bzw. des Rahmenformatzählers 13 mit dem übertragenen Rahmen wird im vorliegenden Fall z.B. Slot o mit 10 bit herangezogen. In diesem Slot, wird ständig ein spezielles Bitmuster (Synchronisationskennung) übertragen. Jede Station vergleicht dieses Muster auf 8 bit Länge mit einer Referenz. Tritt zum erwarteten Zeitpunkt keine Übereinstimmung ein, so liegt mit Sicherheit ein Fehler in der Übertragung oder in der Stationslogik vor.

In diesem Fall wird sofort jede weitere Datenübertragung zu den Port-Modulen 19 unterbunden. Zur Neusynchronisierung wird ebenfalls dieser spezielle Slot herangezogen. Diese Resynchronisierung nach einem Fehler wird von der Master-Station 3 gesteuert, welche nach der Neusynchronisierung die Rahmen wieder für die Datenübertragung freigibt und so lange (Re)synchronisationskennungen aussendet, bis sie selbst eine zurückerhält und daraufhin das «Datenübertragungs Freigabe»-Flag bzw. das Übertragungsflag sendet.

Einer Verbindung wird im Falle einer Standverbindung fix, ansonsten temporär ein oder mehrere Slot(s) zugewiesen. Im Falle der Standverbindung kann die Zuordnung eines Kanals einer Station zu einem Slot über einen PROM-Baustein lokal in jeder Station erfolgen [z.B. muss, um eine Standleitung zwischen Station Nr. 1 Interface Nr. 16 und Station Nr. 4 Interface Nr. 3 zu definieren, in Station Nr. 1 ein Slot (z.B. Slot Nr. 37) dem Interface Nr. 16 und in Station Nr. 4 derselbe Slot Nr. 37 dem Interface Nr. 3 zugeordnet werden].

Im Falle der temporären Verbindung wird diese Zuordnung durch Zusammenspiel der lokalen und zentralen Slot-Zuordnungseinrichtung 15 durch einen Vermittlungsrechner hergestellt.

Die Eingabe der Verbindungsanforderung kann entweder manuell über eine Eingabeeinheit 20, über ein intelligentes Interfaceport (protokollgesteuert) oder vom zentralen Vermittlungsrechner aus gestellt werden.

Die für den Verbindungsaufbau benötigte Zeit ist stark von der Art der Verbindung und von der gewünschten Dokumentation und Validitätsprüfung abhängig. Im einfachsten Fall, einer Point to Point Verbindung ohne Dokumentations- und Prüfungsanforderungen, kann mit Aufbauzeiten zwischen 4 und 10 ms gerechnet werden.

Die maximale Übertragungszeit für ein 10 Bit-Wort (Slot) entspricht somit der Umlaufzeit eines Rahmens. Da die Übertragungszeit des Rahmens immer konstant ist, und etwa 1 ms beträgt, können REAL-TIME-Übertragungen mit etwa 100 - 200 ns Genauigkeit durchgeführt werden. Eine konstante Übertragungsverzögerung ist für die geschlossenen Regelkreise erforderlich.

Die Schnittstellen der Stationen zu Ein- und Ausgabegeräten sind vorteilhafterweise gebräuchliche Standardschnittstellen.

Durch die Verwendung eines internen «Zwischenstandards» (ee) ist es möglich, während der Übertragung eine Konvertierung des Datenformats vorzunehmen (z.B. Verbindung von einem Gerät mit seriellem Interface zu einem Gerät mit 8 bit Parallelinterface) ohne spezielle Konvertierungshard- und -software. Dies ist jedoch nur soweit möglich, als nicht auch eine Protokollkonvertierung erforderlich ist.

Beispiele für Standard Interface Module:

— V 24/RS232C asynchron bis 19,2 kbit/s (8 bit Daten + 2 Steuersignale)

— 20 mA Currentloop    bis 9,6 kbit/s (8 bit Daten + 2 Steuersignale)

— Intelligentes Interface:
Dieser Modul kann bis zu 4 V24/RS232C Interfaces 19,2 kbit/s bedienen, die Daten zwischenspeichern und Protokolle abwickeln. Ebenso kann es speziellen Anforderungen (z.B.: Multiplexen von Schnittstellen, ...) angepasst werden.

— 8 bit parallel I/O + 2 Steuersignale

Ferner können Interfaces für IEEE488/IEC625, sowie Interfaces zur Übertragung von Analogsignalen und von Sprache implementiert werden. Darüber hinaus ist z.B. die Anschlussmöglichkeit über eine X.25 Protokolleinheit an andere Netzwerke möglich. Überdies ist bei der Installation eines zusätzlichen Interfaces in einer bereits bestehenden Station mit keiner Betriebsunterbrechung für die anderen Kanäle zu rechnen.

Aufgrund der räumlichen Ausdehnung des Netzes wurde auf eine zuverlässige und schnelle Fehlerkennung, -ortung und -dokumentation besonderer Wert gelegt. Die Dokumentation und Registrierung der Fehler und Betriebsstörungen erfolgt zentral in der Master-Station 3.

Es werden folgende grundsätzliche Fehlerursachen identifiziert:

Ausfall von Lichtleitern bzw. den Lichtleitern zugeordneten optischen und elektrischen Komponenten, Ausfall oder Störung der Stationslogik, Fehler im Vermittlungssystem, Fehler in den Interfacemodulen.

Bei Fehlern im Übertragungsmedium, z.B. Lichtleiter, generiert die in Übertragungsrichtung folgende Station eine Fehlermeldung an die Master-Station.

Bei Ausfall einer Station durch Ausfall der Synchronisation wird die entsprechende Station auf leitungsnaher Ebene überbrückt. Das Fehlen dieser Station wird durch regelmässiges Polling des Vermittlungssystems erkannt und gemeldet.

Fehler im lokalen Teil des Vermittlungssystems werden durch einen Watchdog erkannt; die jeweilige Einheit versucht eine Fehlermeldung an die Master-Station abzusenden.

Fehler in den Port-Modulen können bei Verwendung intelligenter Module über das Vermittlungssystem gemeldet und protokolliert werden. Ebenso können hier eventuell Massnahmen zur Eliminierung des fehlerhaften Interfaces getroffen werden, sowie Diagnoseinformationen erfasst werden.

Als Übertragungsmedium können alle bekannten Medien wie Kabel, (Baseband, HF moduliert, CATV) Funk oder optische Übertragung verwendet werden, wobei dem optischen Medium der Vorzug gegeben wird.

Im Rahmen ist nur ein Übertragungsflag mit einem Synchronisationszeichen vorgesehen, welches auch Statusinformation bezüglich Synchronisation und «geschlossener Ring» enthält. Der Synchronisationsablauf erfolgt nur einmal bei der Inbetriebnahme des Netzes sowie gegebenenfalls nach einer Störung. Während des Betriebes erfolgt nur eine Überwachung der Synchronisation in jeder Station — einmal bei jedem Umlauf des Rahmens. Die Datenübertragung wird nur freigegeben, wenn eine einwandfreie Ringsynchronisation erreicht ist. Das Übertragungsflag mit einem Synchronisationszeichen steuert die Kanalzuteilung nach Takten im Zeitmultiplexer. Hiedurch wird erreicht, dass keine lastabhängige Verzögerung durch Arbitrationsprobleme auftritt und daher eine konstante Übertragungszeit zwischen zwei Stationen gewährleistet ist. Da die Synchronisation und die Datenübertragung zeitlich streng getrennt sind, können Benützersignale die Synchronisation nicht stören. Es können daher auf diesem LAN gleichzeitig verschiedene Benützerprotokolle übertragen werden.

Die Synchronisation erfolgt durch den umlaufenden Übertragungsrahmen; es erfolgt aber keine interne Synchronisation der Stationen in bezug auf das gerade eintreffende Signal, sondern eine Überprüfung auf das zeitrichtige Eintreffen einer im Informationsblock enthaltenen Kennung.

Das Erkennen der einlangenden Kennungen, bzw. deren Überprüfung erfolgt in entsprechenden Schaltungen, insbesondere Vergleichsschaltungen.

## Patentansprüche

1. Verfahren zur Übertragung von Daten in einem zumindest zwei Stationen aufweisenden Datenring, von welchen, gegebenenfalls Peripheriegeräte besitzenden Stationen zumindest eine eine übergeordnete Master-Station ist, in der für die zu übertragenden Daten ein Übertragungsrahmen generiert wird, der in den Datenring eingespeist und durch alle aufeinanderfolgenden Stationen weitergeleitet wird, wobei jeder Übertragungsrahmen mit konstanter vorgegebener Taktanzahl generiert wird und übertragungsprotokollfrei, insbesondere adressfrei, ausschliesslich die für die Übertragung von einer Station zu einer oder mehreren anderen bestimmten Daten enthält, dass jedem Übertragungsrahmen unmittelbar folgend ein weiterer, identer, gegebenenfalls die nächsten zu übertragenden Daten enthaltender Übertragungsrahmen generiert und eingespeist wird, so dass am Ende eines Übertragungsrahmens unmittelbar der Anfang des weiteren Übertragungsrahmens folgt, und dass die einzelnen, insbesondere untereinander gleich grossen Slots im Übertragungsrahmen vor der Einspeisung des jeweiligen Übertragungsrahmens den einzelnen Stationen zum Informationsaustausch fix oder temporär veränderbar zugeordnet worden sind, dadurch gekennzeichnet, dass bei Betriebsbeginn oder nach fehlerbedingter Ringunterbrechung dem datenfreien Übertragungsrahmen in einem festgelegten Slot, vorzugsweise am Anfang, eine charakteristische Synchronisationskennung aufgeprägt wird, dass dieser keine Daten enthaltende Übertragungsrahmen erforderlichenfalls wiederholt in den Datenring eingespeist wird, dass das Eintreffen der Synchronisationskennung in den einzelnen Stationen als Anfangspunkt einer Zählung des Stationstaktes bzw. der Slots gewertet wird bzw. die Zähler in den Stationen rückgesetzt werden, dass nach Durchlauf aller Stationen bzw. Setzen aller Zähler dem Übertragungsrahmen von der Master-Station in einem festgelegten Slot, vorzugsweise am Anfang, ein Übertragungsflag aufgeprägt wird, das sich vorteilhafterweise von der Synchronisationskennung unterscheidet und vorteilhafterweise demselben Slot wie die Synchronisationskennung aufgeprägt wird, dass zur Überprüfung der Synchronisation, ohne eine Neusynchronisation vorzunehmen bei allen neuerlichen Durchläufen des Übertragungsrahmens durch die Stationen in jeder Station nur zu Soll-Zeitpunkten bzw. in Zeitabständen, die dem Durchlauf eines gesamten Übertragungsrahmens entsprechen, das zeit- bzw. taktrichtige Eintreffen der Synchronisationskennung überprüft wird, indem der zum Soll-Zeitpunkt eingetroffene Slotinhalt mit einem vorgegebenen Muster verglichen wird, dass bei Übereinstimmung bzw. positivem Prüfergebnis jede Station den Rahmen mit dem entsprechenden von der Master-Station aufgeprägten Übertragungsflag weitergibt, dass bei zeitrichtigem Eintreffen der Synchronisationskennung und der aufgeprägten Übertragungsflags die Entnahme von Daten aus den und die Eingage von Daten in die jeweils hiefür vorgesehenen Slots des Übertragungsrahmens freigegeben werden, so dass mit der Übertragung von Daten in dem der Synchronisation aller Stationen zueinander folgenden Umlauf begonnen wird, dass bei der Synchronisation folgenden Umläufen des Übertragungsrahmens zur Feststellung der Synchronisation des Datenringes nur das zeitgerechte Eintreffen der Synchronisationskennung bzw. zur Feststellung der Freigabe der Datenübertragung nur das Übertragungsflag festgestellt bzw. überprüft wird, dass die Zeitdauer des Übertragungsrahmens bzw. allfälliger Vielfacher davon grösser gewählt wird, als die Zeitdauer eines Duchlaufes des Übertragungsrahmens durch den Ring und dass, vorzugsweise in der Master-Station, dieser Zeitdifferenz entsprechende Teile eines oder mehrerer Übertragungsrahmen bis zu ihrer neuerlichen Einspeisung in den Datenring gespeichert bzw. gepuffert werden.

2. Verfahren nach Anspruch 1, dadurch gekennzeichnet, dass während ein und desselben Umlaufes des Übertragungsrahmens in den Stationen den jeweils dieser Station zugeordneten Slots des Übertragungsrahmens die zu übertragenden Daten zur Weiterleitung an ein Peripheriegerät entnommen werden und/oder an eine andere Station zu übertragende Daten in dieser anderen Station zugeordnete Slots eingegeben werden.

3. Verfahren nach Anspruch 1 oder 2, dadurch gekennzeichnet, dass im Datenring nur ein einziger Übertragungsrahmen existiert und weitergegeben wird, dessen End-Slot unmittelbar von seinem Anfangs-Slot gefolgt ist.

4. Verfahren nach einem der Ansprüche 1 bis 3, dadurch gekennzeichnet, dass bei Störungen, z.B. fehlerhafter Weitergabe des Übertragungsrahmens, Erkennung einer Störung in einer Station, Ausfall von Takt-Daten des Übertragungsrahmens, Eintreffen eines nicht einem Übertragungsflag entsprechenden Signals zum vorausbestimmten Zeitpunkt des Eintreffens eines Übertragungsflags, fehlerhaftem Flag-Signal, Ausbleiben eines Flag-Signals usw., die Weitergabe des Übertragungsrahmens an die jeweils nächste Station und die Datenein- bzw. -ausgabe in den bzw. aus dem Übertragungsrahmen unterbrochen wird.

5. Verfahren nach einem der Ansprüche 1 bis 4, dadurch gekennzeichnet, dass in der Station, in der ein Ausbleiben des Taktsignals, z.B. infolge Leitungsbruch, Unterbrechung der Weitergabe des Übertragungsrahmens in einer vorhergehenden Station usw. festgestellt wird, ein neuer Übertragungsrahmen mit einer Fehlerkennung von dieser Station generiert wird, welcher Fehlerkennung einem festgelegten Slot, vorzugsweise am Anfang, dieses Übertragungsrahmens aufgeprägt wird und sich von der Synchronisationskennung und dem Übertragungsflag unterscheidet und vorteilhafterweise dem gleichen Slot wie diese aufgeprägt wird, dass dieser Übertragungsrahmen als Fehlermeldung durch die Stationen bis zu der Master-Station weitergeleitet wird, und dass die Master-Station nach eingetroffener Fehlermeldung, vorteilhafterweise unter Anzeige einer Fehlerinformation, Übertragungsrahmen mit der für die Synchronisierung der Stationen vorgesehenen charakteristischen Synchronisationskennung bis zur neuerlichen Synchronisierung in den Ring einspeist.

6. Verfahren nach einem der Ansprüche 1 bis 5, dadurch gekennzeichnet, dass die Abgabe der Daten eines Übertragungsrahmens aus einer Station an ihr Peripheriegerät so lange verzögert wird, bis in dieser Station das Übertragungsflag eines auf diesen Übertragungsrahmen in dieser Station folgenden Übertragungsrahmens überprüft und als fehlerfrei erkannt und dadurch die Fehlerfreiheit des die entnommenen Daten tragenden Übertragungsrahmens festgestellt wurde.

7. Anordnung zur Übertragung von Informationen in einem Datenring zur Durchführung des Verfahrens nach einem der Ansprüche 1 bis 6, welcher Datenring zumindest zwei über ein Datenübertragungsmedium (5), z.B. Kabel, Sendeeinrichtungen, Lichtleiter, Elektrolyte oder dgl., verbundene Stationen (1, 2 ... n) aufweist, wobei zumindest eine Station eine übergeordnete Master-Station (3) ist, die einen Generator (21, 22, 23) für einen Übertragungsrahmen aufweist, welcher in unmittelbarer Aufeinanderfolge übertragungsprotokollfreie Übertragungsrahmen mit konstanter Taktanzahl erstellt, die von ihrer Mediumschnittstelle (8) unmittelbar aneinander anschliessend in das Übertragungsmedium (5) eingespeist werden, den Stationen weitergegeben und von den Mediumschnittstellen (8) der Stationen in das die Stationen verbindende Übertragungsmedium (5) eingespeist und über das Übertragungsmedium (5) durch alle Stationen zurück an die Master-Station geleitet werden, wobei in den Stationen und der Master-Station jeweils eine Empfangseinrichtung (9) für den Übertragungsrahmen, eine Synchronisationseinrichtung und der Mediumschnittstelle (8) vorgeordnete Ein-Ausgabe-Einrichtungen (16, 26), mit denen an entsprechender Stelle im Übertragungsrahmen enthaltene Daten an Peripheriegeräte (4) weiterleitbar bzw. durch die von den Peripheriegeräten (4) stammende Daten in den Übertragungsrahmen eingebbar sind, vorgesehen sind, dadurch gekennzeichnet, dass an die jeweiligen Ein-Ausgabe-Einrichtungen (16, 26) zur Festlegung der zum Austausch der zu übertragenden Daten der jeweiligen Station (1, 2 ... n) bzw. Master-Station (3) zur Verfügung stehenden Slots eine Slot-Zuordnungseinrichtung (15) angeschlossen ist, dass der Generator einen einem datenfreien Übertragungsrahmen eine Synchronisationskennung aufprägenden Flag-Generator (23) umfasst, mit dem dem Übertragungsrahmen ein Übertragungsflag aufprägbar ist, dass die Synchronisationseinrichtung in der Master-Station (3) zur Erkennung der Synchronisation aller Stationen und zur Einleitung der Einspeisung von Übertragungsrahmen, die zu übertragende Daten enthalten einen Rahmenformatzähler (13) umfasst, welcher Zähler (13) beim ersten Eintreffen einer Synchronisationskennung von einem Flag-Detektor (14) rücksetzbar ist und die einem Durchlaufen des gesamten Übertragungsrahmens entsprechende Zeitdauer bis zum Eintreffen einer mit einem abgesandtenÜbertragungsrahmen wiedereintreffenden Synchronisationskennung misst, dass mit dem Flag-Detektor (14) zu dem vom Zähler (13) vorgegebenen Zeitpunkt eingetroffene Slot-Inhalte mit einem gespeicherten Muster einer Synchronisationskennung vergleichbar sind, dass der Flag-Generator (23) mit dem Flag-Detektor (14) verbunden ist und bei positivem Vergleichergebnis dem Flag-Generator (23) vom Flag-Detektor (14) ein Signal zur Aufprägung eines Übertragungsflags zuführbar ist, dass in jeder Station (1, 2 ... n) als Synchronisationseinrichtung ein beim ersten Eintreffen einer im Übertragungsrahmen enthaltenen Synchronisationskennung von einem Flag-Detektor (14) auf einen Anfangswert rücksetzbarer Rahmenformatzähler (13) vorgesehen ist, dass zu einem vom Zähler vorgegebenen, dem Durchlauf eines gesamten Übertragungsrahmens entsprechenden Zeitpunkt das Eintreffen einer Synchronisationskennung im Flag-Detektor (14) überprüfbar ist, dass die Ein-Ausgabe-Einrichtungen (16, 26) von einer Steuereinrichtung (12) bei vom Flag-Detektor (14) erkanntem zeitgerechtem Eintreffen einer Synchronisationskennung und eines Übertragungsflags in einem Übertragungsrahmen zum Datenaustausch freigegeben sind und dass in der Master-Station (3), vorteilhafterweise zwischen die Ein-Ausgabe-Einrichtung (16) und die Mediumschnittstelle (8), die den Übertragungsrahmen mit gegebenenfalls geändertem Informationsinhalt unmittelbar dem vorangehenden Rahmen folgend erneut in das Medium (5) einspeist, ein Zwischenspeicher (18) für zumindest einen Teil des Übertragungsrahmens zwischengeschaltet ist.

8. Anordnung nach Anspruch 7, dadurch gekennzeichnet, dass der Generator für den Übertragungsrahmen einen andauernd laufenden Takt-Generator (21) und einen mit ihm mitlaufenden Rahmenformatzähler (22) zur Festlegung der Takte bzw. zur Unterteilung des Rahmens in Slots bzw. zur Festlegung von Slots für eine Synchronisationskennung oder für ein Übertragungsflag aufweist, dass der Flag-Generator (23) vom Rahmenformatzähler (22) mit Lageinformationen bezüglich der Slots beaufschlagt ist und dass seine Ausgangssignale als Synchronisationskennung bzw. Übertragungsflag in Abhängigkeit eines von einer zentralen Steuereinheit (24) dem Flag-Generator (23) zugeführten Status-Steuersignals aufprägbar sind.

9. Anordnung nach Anspruch 7 oder 8, dadurch gekennzeichnet, dass die Empfangseinrichtung (9) eine einen Signalempfang an die Steuereinrichtung (12) meldende Medium-Schnittstelle und eine die im eintreffenden Übertragungsrahmen enthaltene Takt-Dateninformation trennende Decodiereinrichtung (10) aufweist, die zur Taktübertragung mit dem Rahmenformatzähler (13) und der Steuereinrichtung (12) und in der Master-Station mit einer Datenentnahmeeinheit (11) bzw. in den anderen Stationen mit einer Datenaustauscheinheit (33), vorzugsweise getakteten Schieberegistern, verbunden ist, und dass dem Flag-Detektor (14) die im Übertragungsrahmen enthaltene Übertragungsflag-Signalinformation zum Vergleich mit vorgegebenen Mustern von der Datenentnahmeeinheit (11) bzw. Datenaustauscheinheit (33) zugeführt ist, deren jeweilige Ausgänge mit der Steuereinrichtung (12) verbunden sind, an deren Steuerausgang, an dem vom Vergleich abhängige Steuersignale anliegen, die Ein-Ausgabe-Einrichtung (16, 26) angeschlossen ist.

10. Anordnung nach einem der Ansprüche 7 bis 9, dadurch gekennzeichnet, dass die Slot-Zuordnungseinrichtung (15) mit Informationen bezüglich des gerade vorliegenden Teiles des Übertragungsrahmens vom Rahmenformatzähler (13) beaufschlagt ist und gegebenenfalls mit einer Zuordnungsabänderungseinrichtung (17) verbunden ist, mit der die in der Slot-Zuordnungseinrichtung (15) enthaltene Zuordnung von Slots zu bestimmten Stationen bzw. Peripheriegeräten (4) abänderbar ist.

11. Anordnung nach einem der Ansprüche 7 bis 10, dadurch gekennzeichnet, dass die Stationen (1, 2 ... n) eine mit einem gegebenenfalls von der Steuereinrichtung (12) abgegebenen, ein fehlerhaftes Eintreffen eines Übertragungsrahmens anzeigenden Sperrsignal beaufschlagbare Mediumschnittstelle (8) aufweisen, dass die Mediumschnittstelle in den Stationen (1, 2 ... n) eine von der Decodiereinrichtung (10) und in der Master-Station (3) eine von dem Takt-Generator (21) getaktete, Daten und Takte verknüpfende Codiereinrichtung (7) aufweist, der in den Stationen (1, 2 ... n) die mit der Decodiereinrichtung (10) verbundene und mit der Ein-Ausgabe-Einrichtung (26) in direktem Datenaustausch stehende Datenaustauscheinheit (33), vorzugsweise ein Schieberegister, vorgeschaltet ist und der in der Master-Station (3) eine Dateneinleseeinheit (6), vorzugsweise ein Schieberegister, vorgeschaltet ist, das gegebenenfalls über eine mit dem Flag-Generator (23) verbundene Datenauswahleinrichtung (25) an den Zwischenspeicher (18) zum Datenerhalt angeschlossen ist.

12. Anordnung nach einem der Ansprüche 7 bis 11, dadurch gekennzeichnet, dass in jeder Station (1, 2 ... n) bei Feststellung eines in der Empfangseinrichtung (9) ausgebliebenen Übertragungsrahmens vom Rahmenformatzähler (13) ein neuer Übertragungsrahmen generierbar ist, dem mit dem Flag-Generator (23) eine Fehlerkennung mit Stationsadresse aufprägbar ist und der über das Übertragungsmedium (5) an die Master-Station (3) weiterleitbar ist.

**Claims**

1. A method for transferring data in a data loop having at least two stations, of which stations optionally provided with peripheral equipment at least one is an overriding master station in which a transmission frame for the data to be transmitted is generated, input into the data loop and transmitted through all successive stations, each transmission frame being generated at a constant, predetermined number of cycles and, logless and in particular addressless, containing only data which are intended to be transmitted from one station to another station or to a plurality of other stations, each transmission frame being immediately followed by the generating and inputting of a further, identical transmission frame optionally containing the data to be transferred next, so that the end of one transmission frame is immediately followed by the beginning of the further transmission frame and the individual, in particular mutually equally dimensioned slots in the transmission frame, being allocated before inputting of the respective transmission frame in a fixedly or temporarily changeable mode to the individual stations for data exchange, characterized that at the beginning of operation or after interruption of the loop caused by error, a characteristic synchronization identification is impressed on the dataless transmission frame in a predetermined slot, preferably at the beginning, that this dataless transmission frame is input into the data loop, if necessary repeatedly, that the arrival of the synchronization identification in the individual stations is taken as the starting point of a count of the station cycle or of the slots or that the counters in the stations are reset, that after passing of all stations or setting of all counters, a transmission flag conveniently differing from the synchronization identification and conveniently impressed on the same slot as the synchronization identification is impressed on the transmission frame by the master station in a predetermined slot, preferably at the beginning, that for checking the synchronization without performing a re-synchronization, the arrival correct as to time and cycle of the synchronization identification at all renewed runs of the transmission frame through the stations only at set times or set time intervals corresponding to the cycle of an entire transmission frame is checked by comparing the slot content arriving at the set time with a predetermined pattern, that at coincidence or positive result of the check, each station passes the frame with the corresponding transmission flag impressed by the master station on, that the retrieval of data from and the inputting of data into the respective slots intended for this purpose in the transmission frame is enabled at timely arrival of the synchronization identification and the impressed transmission flags, so that the transfer of data in the cycle following the synchronization of all stations in respect of one another is started, that in the cycles of the transmission frame following the synchronization, only the timely arrival of the synchronization identification is determined or checked for determining the synchronization of the data loop and only the transmission flag is determined or checked for determining the enabling of the data transmission, that the time duration of the transmission frame or possible multiples thereof is selected greater than the time duration of a cycle of the transmission frame through the loop and that, preferably in the master station, portions of one or of a plurality of transmission frame(s) corresponding to this time difference are stored or buffered up to their renewed inputting into the data loop.

2. The method according to claim 1, characterized that during one and the same cycle of the transmission frame in the stations, the data to be transmitted are retrieved from the respective slots of the transmission frame allocated to the respective stations for transfer to a peripheral unit and/or data to be transmitted to another station are input slots allocated to said other station.

3. The method according to claim 1 or 2, characterized in that only a single transmission frame exists and is transferred in the data loop and that the end slot of said transmission frame is immediately followed by its start slot.

4. The method according to any one of the claims 1 to 3, characterized in that in case of failures, for instance wrong transmission of the transmission frame, detection of a failure in a station, failure of cycle data of the transmission frame, arrival of a signal not corresponding to a transmission flag at the predetermined time of arrival of a transmission flag, wrong flag signal, omission of a flag signal or the like, transmission of the transmission frame to the respective next station and the input and output of data into the and from the transmission frame is interrupted.

5. The method according to any one of the claims 1 to 4, characterized in that in the station in which omission of the cycle signal, for instance due to line breakdown, interruption of transmission of the transmission frame in a preceding station or the like is defected, a new transmission frame with an error identification is generated by this station, which error identification is impressed on a predetermined slot, preferably at the beginning, of this frame and differs from the synchronization identification and the transmission flag and is conveniently impressed on the same slot as these, that this transmission frame is transmitted as an error message through the stations to the master station and that the master station, after receipt of the error message, conveniently under indication of an error information, inputs transmission frames containing the characteristic synchronization identification intended for the synchronization of the stations into the loop up to renewed synchronization.

6. The method according to any one of the claims 1 to 5, characterized in that the transfer of the data of one transmission frame from a station to its peripheral equipment is deferred until the transmission flag of a transmission frame following this transmission frame in this station has been checked and found free of error and that by this, the correctness of the transmission frame carrying the data retrieved was determined.

7. A device for transferring data in a data loop for carrying out the method according to any one of the claims 1 to 6, which data loop is provided with at least two stations (1, 2 ... n) connected by a data-transferring medium (5) such as cables, transmitters, light wave guides, electrolytes or the like, of which at least one station is an overriding master station (3) provided with a generator (21, 22, 23) for a transmission frame which generates logless transmission frames with constant number of cycles in immediate succession, which frames are input into the transmission medium (5) by their medium interface (8) in immediate succession of one another, then passed on to the stations and input by the medium interfaces (8) of the stations into the transmission medium (5) connecting the stations and transmitted via the transmission medium (5) through all the stations back to the master station, each station and each master station being provided with one each receiving means (9) for the transmission frame, one synchronization means and input-output means (16, 26) preceding the medium interface (8) by means of which data contained in an appropriate position in the transmission frame can be transferred to peripheral equipment (4) or data originating from the peripheral equipment (4) can be input into the transmission frame, characterized in that a slot allocating means (15) is connected to the respective input-output means (16, 26) for determining the slots available for the exchange of the data of the respective stations (1, 2 ... n) or the master station (3) to be transferred, that the generator comprises a flag generator (23) impressing a synchronization identification on a dataless transmission frame, a transmission flag being impressable on the transmission frame by the flag generator (23), that the synchronization means in the master station (3) comprises a frame format counter (13) for the identification of the synchronization of all stations and for initiating the inputting of transmission frames containing data to be transferred, which counter (13) is resettable by a flag detector (14) at the first arrival of a synchronization identification and measures the time duration corresponding to a cycle of the entire transmission frame up to the re-arrival of a synchronization identification on a dispatched transmission frame, that slot contents arriving at the time predetermined by the counter (13) are comparable to a stored pattern of a synchronization identification by means of the flag detector (14), that the flag generator (23) is connected with the flag detector (14) and a signal for impressing a transmission flag is supplied by the flag detector (14) to the flag generator (23) at positive result of the comparison, that a frame format counter (13) resettable to an initial value by a flag detector (14) at first arrival of a synchronization identification contained in the transmission frame is provided in each station (1, 2 ... n) as a synchronization means, that the arrival of a synchronization identification in the flag detector (14) can be checked at a time predetermined by the counter and corresponding to the cycle of a complete transmission frame, that the input-output means (16, 26) are enabled by a control means (12) to the exchange of data at the timely arrival of a synchronization identification and a transmission flag in a transmission frame recognized by the flag detector (14) and that a buffer (18) for at least a portion of the transmission frame is interposed in the master station (3), conveniently between the input-output means (16) and the medium interface (8) inputting the transmission frame with optionally changed information content into the medium (5) immediately following the preceding frame.

8. The device according to claim 7, characterized in that the generator for the transmission frame is provided with a permanently running clock generator (21) and a frame format counter (22) running with it for determining the cycles or for subdividing the frame into slots or for determining slots for a synchronization identification or for a transmission flag, that the flag generator (23) is fed by the frame format counter (22) with information relating to the position of the slots and that its outgoing signals are impressable as synchronization identification or transmission flag as a function of a status control signal fed to the flag generator (23) by a central control unit (24).

9. The device according to claim 7 or 8, characterized in that the receiving means (9) is provided with a medium interface signalling reception of a signal to the control means (12) and with a decoder (10) separating the cycle-data information contained in the arriving transmission frame, which decoder (10) is connected for the transmission of cycles to the format counter (13) and the control means (12) and in the master station to a data retrieval unit (11) or in the other stations to a data exchange unit (33), preferably clocked shift registers, and that the flag detector (14) is fed with transmission flag information contained in the transmission frame for comparison with predetermined patterns from the data retrieval unit (11) or data exchange unit (33) whose respective outlets are connected to the control unit (12) at whose control outlet supplied with control signals depending on the comparison the input-output means (16, 26) is connected.

10. The device according to any one of the claims 7 to 9, characterized in that the slot allocation means (15) is supplied with information relating to the momentarily present portion of the transmission frame by the frame format counter (13) and is optionally connected to an allocation changing means (17) by means of which the allocation of slots to certain stations or peripheral equipment (4) contained in the slot allocation means (15) can be changed.

11. The device according to any one of the claims 7 to 10, characterized in that the stations (1, 2 ... n)

are provided with a medium interface (8) optionally supplied by the control means with a disabling signal indicating the erroneous arrival of a transmission frame, that the medium interface in the stations (1, 2 ... n) is provided with an encoder (7) chaining data and cycles and clocked by the decoder (10) in the stations and by the clock generator (21) in the master station (3), which encoder (7) is preceded in the stations (1, 2 ... n) by a data exchange unit (33), preferably a shift register, which is connected to the decoder (10) and in direct data exchange with the input-output means (26), which encoder (7) is preceded in the master station (3) by a data read-in unit (6), preferably a shift register, which is optionally connected to the buffer memory (18) for data reception via a data selection means (25) connected to the flag generator (23).

12. The device according to any one of the claims 7 to 11, characterized in that in each station (1, 2 ... n), a new transmission frame is generated by the frame format counter (13) on detection of a transmission frame missing in the receiving means (9), onto which new frame the flag generator (23) impresses an error identification with station address and which frame is then transmitted to the master station (3) via the transmission medium (5).

**Revendications**

1. Procédé pour le transfert d'informations dans une boucle de données comprenant au minimum deux stations dont au moins une des stations, possédant le cas échéant des périphériques, est une station-maître privilégiée dans laquelle est généré un cadre de transfert pour les informations à transmettre, ledit cadre étant introduit dans la boucle de données et transmis à travers toutes les stations successives, chaque cadre de transfert étant généré avec un nombre de rythmes constant prédéfini et contenant, sans procès-verbal de communication et en particulier sans adresse, exclusivement les informations destinées au transfert d'une station à une autre ou à plusieurs autres, en sorte que, faisant suite immédiatement à chaque cadre de transfert, soit généré et introduit un autre cadre de transfert identique et contenant le cas échéant les informations suivantes à transférer, de telle manière que le début du nouveau cadre de transfert fasse immédiatement suite à la fin du cadre précédent et que les différents segments, en particulier les segments de même longueur, dans le cadre de transfert, aient été assignés, avant l'introduction dudit cadre de transfert, de façon fixe ou temporairement modifiable, aux différentes stations en vue de l'échange d'informations, caractérisé en ce que en début d'opération ou après une interruption de la boucle consécutive à une erreur, une marque de synchronisation caractéristique est apposée au cadre de transfert ne contenant pas d'informations, dans un segment à location fixe, avantageusement au début du cadre, ce cadre de transfert qui ne contient pas d'informations étant si besoin réintroduit dans la boucle de données, l'arrivée de la marque de synchronisation dans les différentes stations étant interprétée comme point de départ du comptage du rythme de station ou des segments avec remise des compteurs à l'état initial, un label de transfert étant apposé par la station-maître au cadre de transfert, dans un segment à location fixe, avantageusement au début du cadre, après passage à travers toutes les stations ou remise à l'état initial de tous les compteurs, ce label se distinguant avantageusement de la marque de synchronisation et étant apposé avantageusement au même segment que la marque de synchronisation, la synchronisation étant vérifiée de telle façon que sans procéder à une nouvelle synchronisation, à tous les nouveaux passages du cadre de transfert dans les stations, l'arrivée de la marque de synchronisation soit surveillée dans chaque station uniquement dans les délais prédéfinis ou à des intervalles de temps correspondant au passage d'un cadre de transfert complet, pour vérifier si elle apparaît dans les délais voulus et au rythme voulu, le contenu de segment arrivé dans le délai prédéfini étant comparé avec un modèle donné; que chaque station transmet, en cas de concordance ou de résultat de contrôle positif, le cadre avec le label de transfert correspondant apposé par la station-maître, le prélèvement et l'introduction de données dans les segments du cadre de transfert prévus à cet effet étant libérés lorsque la marque de synchronisation et les labels de transfert apposés arrivent dans le délai voulu, en sorte que le transfert d'information commence dans le cycle de passage suivant la synchronisation de toutes les stations entre elles; que pendant les cycles du cadre de transfert suivant la synchronisation il soit seulement établi, pour vérifier la synchronisation de la boucle de données, si la marque de synchronisation est arrivée dans le délai voulu ou il soit seulement constaté ou vérifié la présence du label de transfert pour vérifier le déclenchement du transfert d'informations; que la durée du cadre de transfert, ou le cas échéant des multiples de ce cadre, est plus grande que la durée d'un passage du cadre de transfert dans la boucle et que les éléments d'un ou plusieurs cadre(s) de transfert correspondant à cette différence de temps sont mémorisés ou tamponnés, avantageusement dans la station-maître, jusqu'à leur nouvelle introduction dans la boucle de données.

2. Procédé selon la revendication 1, caractérisé en ce que pendant un même cycle de passage du cadre de transfert dans les stations, les informations à transférer sont prélevées dans les segments du cadre de transfert assignés à la station considérée, pour être transmises à un périphérique et/ou que les données à transférer dans une autre station sont introduits dans les segments assignés à cette autre station.

3. Procédé selon les revendications 1 ou 2, caractérisé en ce que il existe et il est transmis dans la boucle de données un seul cadre de transfert dont le segment final est suivi immédiatement de son segment initial.

4. Procédé selon une des revendications 1 à 3, caractérisé en ce que, en cas de défaillance telle que transmission défectueuse du cadre de transfert, identification d'une défaillance dans une station, absence de données-rythme du cadre de transfert, arrivée d'un signal ne correspondant pas à un label de transfert au moment prédéterminé pour l'arrivée d'un label de transfert, signal de label défectueux, absence d'un signal de label, etc., la transmission du cadre de transfert à la station suivante et l'entrée ou le prélèvement des données dans le cadre de transfert sont interrompues.

5. Procédé selon une des revendications 1 à 4, caractérisé en ce que dans la station dans laquelle a été constatée la non-arrivée du signal de rythme, p.ex. par suite d'une rupture de conducteur, interruption de la transmission du cadre de transfert dans une station précédente, etc., un nouveau cadre de transfert est généré par cette station avec une marque d'erreur qui est apposée à un segment à location fixe, avantageusement au début de ce cadre de transfert, ladite marque se distinguant de la marque de synchronisation et du label de transfert et étant avantageusement apposée au même segment que ceux-ci, ce cadre de transfert étant transmis en tant que signal d'erreur à travers les stations jusqu'à la station-maître et que, après arrivée du message d'erreur, avantageusement avec affichage d'information d'erreur, la station-maître introduit dans la boucle, jusqu'à nouvelle synchronisation, des cadres de transfert avec la marque de synchronisation caractéristique prévue pour la synchronisation des stations.

6. Procédé selon une des revendications 1 à 5, caractérisé en ce que la transmission des données d'un cadre de transfert d'une station à son périphérique est retardée jusqu'à ce que, dans cette station, le label de transfert d'un cadre de transfert succédant audit cadre de transfert dans cette station ait été vérifié et reconnu exempt d'erreur par quoi est reconnue l'absence d'erreur du cadre de transfert portant les données prélevées.

7. Dispositif pour le transfert d'informations dans une boucle de données pour l'application du procédé selon une des revendications 1 à 6, ladite boucle de données présentant au moins deux stations (1, 2 ... n) reliées par un moyen de transfert de données (5) tel que câble, dispositifs d'émission, fibre optique, électrolyte ou autre, une station au moins étant une station-maître privilégiée (3), possédant un générateur (21, 22, 23) de cadre de transfert, qui produit des cadres de transfert d'un nombre de rythmes constant, se faisant suite immédiatement et exempts de procès-verbal de communication, introduits par l'interface de moyen de transfert (8) de la station-maître dans le moyen de transfert (5) en se succédant sans interruption, transmis aux stations et introduits par l'interface de moyen de transfert (8) des stations dans le moyen de transfert (5) reliant les stations et ramenés par le moyen de transfert (5) à la station-maître en traversant toutes les stations, les stations et la station-maître comportant chacune un dispositif de réception (9) pour le cadre de transfert, un dispositif de synchronisation et des dispositifs d'entrée et de sortie (16, 26) précédant l'interface de moyen de transfert (8), à l'aide desquels les informations contenues à l'emplacement correspondant par le cadre de transfert peuvent être transmises aux périphériques (4) ou à l'aide desquels les informations provenant des périphériques (4) peuvent être entrées dans la cadre de transfert, caractérisé en ce que un dispositif d'assignation de segment (15) est raccordé aux dispositifs d'entrée-sortie correspondants (16, 26) pour déterminer les segments disponibles pour l'échange des informations à transmettre de la station considérée (1, 2 ... n) ou de la station-maître (3), le générateur comprenant un générateur de label (23) apposant une marque de synchronisation à un cadre de transfert exempt de données, permettant d'apposer un label de transfert au cadre de transfert, le dispositif de synchronisation de la station-maître (3) comportant, aux fins de reconnaissance de la synchronisation de toutes les stations et de l'initiation de l'introduction de cadres de transfert contenant les données à transmettre, un compteur de format de cadre (13) qui peut être remis à l'état initial par un détecteur de label (14) la première fois qu'arrive une marque de synchronisation et qui mesure le délai correspondant à un passage du cadre de transfert complet jusqu'à l'arrivée d'une marque de synchronisation revenant avec un cadre de transfert envoyé, les contenus des segments arrivés avec le détecteur de label (14) dans le délai prédéfini par le compteur étant comparables avec un modèle mémorisé d'une marque de synchronisation, le générateur de label (23) étant relié au détecteur de label (14) et, en cas de résultat positif de la comparaison, un signal d'apposition d'un label de transfert pouvant être acheminé par le détecteur de label (14) au générateur de label (23), un compteur de format de cadre (13) susceptible d'être ramené à une valeur initiale par un détecteur de label (14) la première fois qu'arrive une marque de synchronisation contenue dans un cadre de transfert étant prévu dans chaque station (1, 2 ... n) en tant que dispositif de synchronisation, l'arrivée d'une marque de synchronisation dans le détecteur de label (14) étant vérifiable à un moment défini par le compteur et correspondant au passage d'un cadre de transfert complet, les dispositifs d'entrée-sortie (16, 26) étant libérés pour l'échange de données par un dispositif de commande (12) lorsque le détecteur de label (14) a reconnu que la marque de synchronisation et le label de transfert sont arrivés dans le délai voulu dans le cadre de transfert, et une mémoire intermédiaire (18) pour au moins une partie du cadre de transfert étant insérée dans la station-maître (3), avantageusement entre le dispositif d'entrée-sortie (16) et l'interface de moyen de transfert (8) qui réintroduit le cadre de transfert dans le moyen de transfert (5), avec le cas échéant un contenu informatif modifié, immédiatement à la suite du cadre précédent.

8. Dispositif selon la revendication 7, caractérisé en ce que le générateur du cadre de transfert présente un générateur de rythme (21) marchant en permanence et un compteur de format de cadre (22) marchant avec lui pour la détermination des rythmes et la division du cadre en segments ou la détermination des segments pour une marque de synchronisation ou bien pour un label de transfert, le générateur de label (23) recevant du compteur de format de cadre (22) des informations concernant les segments et ses signaux de sortie pouvant être apposés en tant que marque de synchronisation ou label de transfert en fonction d'un signal d'état pilote envoyé par une unité de commande centrale (24) au générateur de label (23).

9. Dispositif selon la revendication 7 ou 8, caractérisé en ce que le dispositif de réception (9) présente une interface de moyen de transfert signalant la réception d'un signal à l'unité de commande (12) et un dispositif de décodage (10) séparant l'information de données et de rythme contenue dans le cadre de transfert venant d'arriver, relié au compteur de format de cadre (13) et au dispositif de commande (12) pour la transmission du rythme et relié, dans la station-maître, à une unité de prélèvement de données (11) et dans les autres stations à une unité d'échange de données (33), avantageusement des registres de décalage rythmés, l'information de signal de label de transfert contenue dans le cadre de transfert étant envoyée au détecteur de label (14), pour être comparée avec des modèles données, par l'unité de prélèvement de données (11) ou l'unité d'échange de données (33) dont les sorties respectives sont reliées au dispositif de commande (12) à la sortie de commande duquel est raccordé le dispositif entrée-sortie (16, 26), des signaux de commande dépendants de la comparaison étant appliqués à ladite sortie de commande.

10. Dispositif selon une des revendications 7 à 9, caractérisé en ce que le dispositif d'assignation des segments (15) reçoit du compteur de format de cadre (13) des informations relatives à la partie du cadre de transfert qui se trouve à cet instant dans la station et est le cas échéant relié à un dispositif de modification d'assignation (17) permettant de modifier l'assignation de segments à des stations ou des périphériques (4) donnés telle qu'elle est prévue dans le dispositif d'asignation des segments (15).

11. Dispositif selon une des revendications 7 à 10, caractérisé en ce que les stations (1, 2 ... n) comportent une interface de moyen de transfert (8) susceptible de recevoir un signal inhibiteur émis le cas échéant par le dispositif de commande et indiquant une erreur dans l'arrivée d'un cadre de transfert, l'interface de moyen de transfert présentant un dispositif de codage (7) combinant données et rythmes, rythmé dans les stations (1, 2 ... n) par le dispositif de décodage (10) et dans la station-maître (3) par le générateur de rythme (21), ladite interface étant procédée dans les station-maîtres (1, 2 ... n) par l'unité d'échange de données (33), avantageusement un registre de décalage, raccordée au dispositif de décodage (10) et en échange direct de données avec le dispositif d'entrée-sortie (26), et étant précédée dans la station-maître (3) d'une unité de lecture de données (6), avantageusement un registre de décalage, lequel est raccordé le cas échéant à la mémoire intermédiaire (18) par un dispositif de sélection de données (25) relié au générateur de label (23).

12. Dispositif selon une des revendications 7 à 11, caractérisé en ce que lorsqu'il a été constaté qu'un cadre de transfert manque dans le récepteur (9) un nouveau cadre de transfert peut être généré dans chaque station (1, 2 ... n) par le compteur de format de cadre (13), une marque d'erreur avec adresse de station pouvant être apposée à l'aide du générateur de label (23) à ce nouveau cadre qui peut être transmis par le moyen de transfert (5) à la station-maître (3).

**FIG 1**

0 144 403

# FIG 2

| 511 | 0 | 1 | .... | 15 | 16 | 17 | ..... | .... | n-1 | n | n+1 | .... | .... | .... | 511 | 0 |

28    28

**FIG 3**